(19) 

**Europäisches Patentamt**
**European Patent Office**
**Office européen des brevets**

(11) **EP 4 491 302 A1**

(12) **EUROPEAN PATENT APPLICATION**
published in accordance with Art. 153(4) EPC

(43) Date of publication:
**15.01.2025 Bulletin 2025/03**

(21) Application number: **22930964.6**

(22) Date of filing: **26.05.2022**

(51) International Patent Classification (IPC):
**B22F 9/08** (2006.01)     **B01F 29/00** (2022.01)

(52) Cooperative Patent Classification (CPC):
**B01F 29/00; B01J 2/02; B22F 9/08; F26B 3/24; F26B 17/28**

(86) International application number:
**PCT/JP2022/021536**

(87) International publication number:
**WO 2023/170987 (14.09.2023 Gazette 2023/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.03.2022 PCT/JP2022/011076**

(71) Applicant: **M. Technique Co., Ltd.**
**Izumi-shi, Osaka 594-1144 (JP)**

(72) Inventors:
• **YOSHIZUMI, Mai**
**Izumi-shi, Osaka 594-1144 (JP)**
• **ENOMURA, Masakazu**
**Izumi-shi, Osaka 594-1144 (JP)**

(74) Representative: **Marks & Clerk LLP**
**15 Fetter Lane**
**London EC4A 1BW (GB)**

(54) **METHOD FOR CONTINUOUSLY PRODUCING EUTECTIC ALLOY FINE PARTICLES**

(57) The present invention addresses the problem of providing a method for continuously producing eutectic alloy fine particles, the method enabling the production of eutectic alloy particles, the particle diameters of which are easily controlled. The present invention provides a method for producing eutectic alloy fine particles that have a particle diameter of 0.1 $\mu$m to 50 $\mu$m, wherein: a fluid to be processed containing at least a melt of a eutectic alloy, the melt that serves as a dispersoid, and a solvent that serves as a dispersion medium is used; the fluid to be processed is continuously introduced an atomizer which atomizes the fluid to be processed between at least two processing surfaces that are arranged to face each other; the fluid to be processed goes through a dispersion state in which the melt of a eutectic alloy and the solvent are both in a liquid state within the atomizer; and solid eutectic alloy fine particles are obtained by cooling the fluid discharged from the atomizer. With respect to this method for producing eutectic alloy fine particles, the melt of a eutectic alloy is dispersed in the solvent in the form of droplets between the at least two processing surfaces; and the particle diameters of the melt of a eutectic alloy in the form of droplets are controlled by changing the viscosity of the solvent to be introduced between the at least two processing surfaces.

FIG. 5

EP 4 491 302 A1

**Description**

The present invention relates to a method for continuously producing eutectic alloy fine particles.

Background Art

Many metal materials are currently in use, and in industry, many metals are used not as single metals but in the form of alloys. Alloys exist in a variety of states, including a solid solution in which constituent metals are completely dissolved, eutectic in which the respective metals are separately separated, and intermetallic compound in which the metals are bound together in a constant proportion, or the like. The metals in the eutectic state have a merit that the melting point are lower at the eutectic point as compared with pure metals, so that, for example, solder alloys used for bonding substrates, or the like, are often eutectic alloy.

With improvements in coating and printing technology in recent years, not only bulk metals but also metal fine particles are increasingly used for bonding substrates, and the like. Metal fine particles have advantage of handling such as capable of being coated in a paste state, so that, for example, solder paste using solder fine particles is used as a bonding material for substrates of electronic components, etc., as well as conductive pastes in which metals having high conductivity such as silver, copper, or their alloys are dispersed are used not only conductive adhesives but also printed material on substrates as wiring materials, and metal fine particles such as nickel are used in a paste state as electrode materials for multilayer ceramic capacitors (MLCC) or electromagnetic shielding materials, etc.

Conventional metal fine particles have mainly several tens of micrometers to several hundreds of micrometers in size, but in recent years, as electronic devices have become more sophisticated and compact, the diameters of connection points between circuits in solder pastes used as substrate bonding materials, for example, have become smaller and smaller, and metal fine particles with smaller diameters are required. When metal fine particles are coated by using screen printing, inkjet printing, dispensers, etc., if the particle diameter of the metal fine particles to be used has a distribution, there is a fear that not only can clogging occur, but also there are possibility that wettability with the substrate may deteriorate and defects, etc., may occur during printing. Therefore, in order to satisfy conductive reliability and insulation reliability in metallic fine particles used in electronic devices, not only finer particle size but also metal fine particles with uniform particle size and high sphericity are required.

As the method for producing metal fine particles, the pulverization method, liquid-phase reduction method, gas-phase method, and atomization method, and the like, are known. For example, various production methods have been investigated for solder particles for solder paste, but for the reasons mentioned above, most of the commercially available products use particles produced by the atomization method after classification. The atomization method is less expensive compared to the other production methods mentioned above and is a common method for producing alloy particles, in particular, alloy particles with a low melting point. There are several kinds of the atomization methods, depending on the method of melting the metal and the method of making droplets of the molten metal. In addition to the spray method in which the molten metal is sprayed and rapidly cooled to solidify, as known other methods, which include the gas atomization method in which a high pressure gas is sprayed onto the molten metal and atomized, and scattered droplets are solidified, the water atomization method in which not a high pressure gas but water is sprayed and atomized to form droplets, the disk atomization method in which the molten metal is poured onto a rotating disk and droplets are formed by the centrifugal force of the disk, the plasma atomization method in which droplets of the molten metal is formed by plasma, etc. (Non-Patent Document 1)

The particle diameter, surface condition, and shape of particles produced by the atomization method are affected by the surface tension of the metal, the gravity at the time of falling droplets, and the surrounding atmosphere due to the method of turning the molten metal into droplets. The surface tension of molten metals is extremely high, for example, the surface tension of water is 72 dyn/cm at 25°C (air atmosphere), whereas that of mercury is 483 dyn/cm at 25°C (hydrogen atmosphere), and that of gallium is 733 dyn/cm at 40°C (hydrogen atmosphere) (Non-Patent Document 2). Therefore, a large amount of energy is required to atomize the particles. The gas atomization method and the plasma atomization method impart larger force such as shear to the molten metal as compared with the conventional atomization method, so that it can be easily atomized, but they require large-scale equipment such as equipment for spraying high-pressure gas and equipment for generating plasma is more extensive, and the production is expensive. In addition, in the gas atomization method, there are some cases that minute particles adhere to the surfaces of other particles to cause in a state called satellites which reduces the sphericity of the particles, or gas may be taken inside, creating voids. In the water atomization method, a medium to be used is water so that it is a less expensive production method compared to the gas atomization method and the plasma atomization method, but since it is carried out by spraying water, there are problems such as oxidation of the metal surface and reduction in sphericity (Non-Patent Document 3). In addition, particles produced by the atomization method are polydisperse, so that a classification step is required to obtain the desired particles.

In Patent Document 1, solder fine particles are produced using a centrifugal atomization method (disk atomization method) without classification instead of the gas atomization method in terms of narrowing the particle size distribution. The disk atomization method is a method in which the molten metal is poured onto a rotating disk and droplets of the molten metal are formed by the centrifugal force of the disk, and high pressure is not used when the molten metal is turned into droplets so that there are few parts constituting the device and the structure is simple. The molten metal is turned into droplets by centrifugal force, so that the particle diameter can be more uniform compared to the gas atomization method, etc., which are affected by atomization state. However, the average particle diameter is relatively large as 10 to 70 $\mu$m, and for obtaining metal powder having a desired average particle diameter, it is necessary to high-speed rotation of the disk, and in Example 1 of Patent Document 1, for producing solder powder having an average particle diameter of 40 $\mu$m, the disk is rotated at a high speed of 42,000 rpm to 44,000 rpm. Wear and deterioration of the disk occur after long-term operation, and in the above-mentioned Example 1, the rotation speed is increased from 42,000 rpm to 44,000 rpm during the production of metal powder to prevent the coarse powder rate from increasing, and it is sufficient to believe that the wear of the disk due to its high-speed operation for a long term affects the particle diameter. Wear and deterioration of the disks not only increases production costs such as maintenance, etc., but can also be a factor of causing failure in scaling up when increasing production volume. Also, in Non-Patent Document 3, there are mentioned that depending on the particle size, the effect of differences in specific gravity and surface tension of each metal may cause bias in composition.

Patent Document 2 describes a method for producing solder particles that achieves both a small average particle diameter and a narrow particle size distribution by treating solder fine particles which are raw material particles having a wide particle size distribution by the method described in Patent Document 2. Specifically, solder fine particles are accommodated in a depression of a substrate, and the solder fine particles accommodated in the depression are fused to form solder particles inside the depression, and by using solder fine particles having a wide particle size distribution, the ability to fill the depression with solder fine particles increases. When the treatment described in Patent Document 2 is implemented, the number of steps will be increased by one, so that the cost similar to that of implementing post-processing such as classification incurs. If only particles of a certain size are required, the yield will be higher, which is more advantageous than implementing classification, but if a variety of particle diameters are required, the yield will not be significantly different from that of classified particles.

Patent Document 3 discloses a method for producing monodispersed metal particles. In Patent Document 3, a porous glass membrane is used to produce monodispersed metal particles via a monodispersed emulsion, specifically, liquid metal is passed through a porous glass membrane to obtain a monodispersed emulsion in which liquid metal particles are dispersed in a liquid continuous phase, and the liquid metal particles are solidified to obtain monodispersed metal particles. In the production method described in Patent Document 3, there are advantages that are not present in the other production methods such as the centrifugal atomization method (rotary disk method) and the gas atomization method (atomization method) in the points that monodispersed metal particles can be produced with one step and classification is not necessary. However, in order to produce metal particles having different particle diameter, porous glass membranes having different pore sizes are used, and instead of requirement of classification, a porous glass membrane is required for each target particle diameter. Also, when producing a plurality of different kind of metal fine particles, it is necessary to clean the porous glass membrane to prevent contamination with different metals. Sn, which is often used in alloys, is one of the metals that is difficult to dissolve, and it takes a considerable amount of time to clean the inside of a minute gap such as a porous glass membrane, so that when it is practically produced, it is necessary to prepare a porous glass membrane for each kind of metal. Nowadays, there are various needs, and it is rare to produce only one grade of the same kind of metal fine particles, so that the cost increases by the number of porous glass membranes prepared, and the labor to replace the porous glass membranes will be also increased during production.

The pulverization method is a breakdown method, which is a method for pulverizing metal into fine particles using a pulverizer, or the like. It is also possible to further refine particles that have become fine to a certain extent using a media mill, or the like. However, since most metals have high-hardness and ductility, a large amount of energy is required to refine them less than a certain size. In addition, it is more difficult to reduce the particle diameter than with other producing methods so that this method has not been used much in recent years.

The liquid phase reduction method is a method called as a build-up method compared with the breakdown method, and is a method of obtaining metal fine particles by reducing metal ions in a liquid using a reducing agent. Many nano-sized particles are produced by the liquid phase reduction method, and depending on how the raw materials are charged, it is possible to produce particles having a high degree of freedom, such as core-shell type particles or perform surface modification, etc. However, in the liquid phase reduction method, since a reducing agent or a dispersant is used in the reaction, impurities other than the target metal are present in the system, which causes a decrease in the purity of the metal fine particles. In addition, when producing alloy fine particles using the liquid phase reduction method, the reduction rate of metal ions varies depending on the element of the raw material, so that compositional bias often occurs within the particles. When the reduction rate is significantly increased to carry out the reaction rapidly to prevent compositional bias, the metal becomes a solid solution or amorphous, so that it is often not suitable for producing fine metal particles having a eutectic composition. Patent Document 4, filed by the applicant of the present application, is to provide a solid metal alloy in which at least two kinds of metals constituting the alloy show a finely mixed state at a nano level in a specific region of the solid phase showing a non-solid solution state in the equilibrium phase diagram of the alloy, and this is to separate at least two kinds of metals constituting the alloy substantially simultaneously by controlling the separation time of at least the two kinds of metals constituting the alloy, and the obtained solid metal alloy is a solid solution alloy and is not a eutectic alloy.

Both the vapor deposition method (PVD method) and the chemical vapor deposition method (CVD method) are gas-phase methods. The vapor deposition method (PVD method) is a method of producing a formed film or fine particles by evaporating and sublimating raw materials in a vacuum by heating, etc., while the chemical vapor deposition method (CVD method) is a method of producing a formed film or fine particles by reacting gaseous raw materials by plasma or reducing gas, etc. The production of thin films or metal fine particles of simple metals is well known and production of alloy fine particles has also been reported (Patent Document 5). However, the equipment required is large-scale due to vacuum facility, plasma facility, and production costs are high. Also, similarly to the atomization method, the particles obtained are polydisperse, so that a classification step is required to obtain the desired particles.

Patent Document 6 proposes a method for producing fine particles in which a minute space of 1 mm or less is maintained between two processing surfaces capable of approaching to and separating from each other which relatively rotate; the minute space maintained between the two processing surfaces serves as a flow path for the fluid to be processed thereby forming a forced thin film fluid of the fluid to be processed; and separation of the fine particles (in particular, nanoparticles) is carried out in the forced thin film. According to the method for producing fine particles described in Patent Document 6, it is described that separation of minute fine particles can be realized and fine particles having good redispersibility can be obtained, and it is desirable that the treatment in the fluid processing device described in Patent Document 6 is carried out under laminar flow conditions. However, Patent Document 6 neither describes obtaining alloy particles by solidifying molten alloy in droplet state in the dispersion solution discharged from between two processing surfaces, nor the particle diameter of the obtained alloy particles.

PRIOR ART DOCUMENTS

PATENT DOCUMENT

Patent Document 1: Japanese Patent Laid-Open Publication No. 2008-240060A
Patent Document 2: International Patent Laid-Open Publication No. 2020/004511
Patent Document 3: International Patent Laid-Open Publication No. 03/035308
Patent Document 4: Japanese Patent Laid-Open Publication No. 2017-2406A
Patent Document 5: International Patent Laid-Open Publication No. 2016/038711
Patent Document 6: Japanese Patent Laid-Open Publication No. 2011-189348A

NON-PATENT DOCUMENT

Non-Patent Document 1: written by Akihiko Yanagitani, Atomized Metal Powders "3D Printer and Recent Forming Technology" I. General Introduction, Introduction to Atomized Metal Powders, Special Steel, Special Steel Association of Japan, July 1, 2016, Volume 65, Number 4, pp. 2-5
Non-Patent Document 2: The Chemical Society of Japan, "Chemistry Handbook, Fundamentals II," Revised 3rd Edition, Maruzen Corporation, June 25, 1984, pp. 80-81
Non-Patent Document 3: written by Nobuyasu Kawai, Yoshitomo Sato, Yoshikazu Seki, "Production of metal fine powder by atomization method," Resources Processing Technology, Japan Society of Environmental Resource Engineers, December 29, 1986, Vol. 33, No. 4, pp. 227-232.
Non-Patent Document 4: written by Takao Hamamoto, "Atomized Metal Powder '3D Printer and Recent Forming Technology' II. Powder Manufacturing Technology and Features 3. Features and Latest Trend of Disk Atomization," Special Steel, Special Steel Association of Japan, July 1, 2016, Vol. 65, No. 4, pp. 18-21

SUMMARY OF THE INVENTION

PROBLEMS TO BE SOLVED BY THE INVENTION

In view of the above situation, an object of the present invention is to provide a method for continuously producing eutectic alloy fine particles whose particle diameter can be easily controlled.

MEANS FOR SOLVING THE PROBLEM

As a result of intensive studies to solve the above-mentioned problems, the present inventors have found that eutectic alloy fine particles whose particle diameter is controlled can be easily and continuously produced such that a fluid to be processed that contains at least a melt of eutectic alloy as a dispersoid and a solvent as a dispersion medium is introduced an atomizer that continuously atomizes fine particles between at least two processing surfaces arranged opposite to each other, and the melt of eutectic alloy and the solvent which go through via a dispersion state which are both in a liquid state in the atomizer, and then, the fluid discharged from the atomizer is cooled. In other word, the present invention is as follows.

[1] The first aspect of the present invention is a method for continuously producing eutectic alloy fine particles having a particle diameter of $0.1\ \mu m$ to $50\ \mu m$, wherein the method comprises that a fluid to be processed that contains at least a melt of a eutectic alloy as a dispersoid and a solvent as a dispersion medium is used, the fluid to be processed is introduced continuously into an atomizer in which the fluid is atomized between at least two processing surfaces arranged opposite to each other, and the melt of the eutectic alloy and the solvent go through a dispersion state, which are both in a liquid state, in the atomizer, and then, the fluid discharged from the atomizer is cooled to obtain solid eutectic alloy fine particles;

the melt of the eutectic alloy is dispersed in droplet state into the solvent between the at least two processing surfaces; and
the particle diameter of the melt of the eutectic alloy in the droplet state is controlled by changing a viscosity of the solvent introduced between the at least two processing surfaces.
Here, the "dispersion state, which are in a liquid state" refers to a state in which the melt of the eutectic alloy that serves as a dispersoid is dispersed in the solvent that serves as a dispersion medium in a droplet state.

[2] The second aspect of the present invention is the method for continuously producing eutectic alloy fine particles according to [1], wherein

the atomizer used in the producing method is provided with a rotary drive mechanism which rotates at least one of the at least two processing surfaces relative to the other; the least two processing surfaces define a circular flow path through which the fluid to be processed passes; and the fluid to be processed passes from the inside to the outside of the circular flow path in the radial direction in a state of being a thin-film fluid, whereby the fluid to be processed is subjected to dispersion treatment between the at least two processing surfaces, and the fluid subjected to dispersion treatment is discharged from between the at least two processing surfaces from the outside;
the fluid subjected to dispersion treatment is a dispersion solution in which the melt of the eutectic alloy is dispersed in droplet state into the solvent;
the melt of the eutectic alloy in droplet state is solidified to obtain solid eutectic alloy fine particles; and
a particle diameter of the solid eutectic alloy fine particles is controlled by changing a viscosity of the solvent introduced between the at least two processing surfaces.

[3] The third aspect of the present invention is the method for continuously producing eutectic alloy fine particles according to [1] or [2], wherein
the fluid to be processed contains a dispersion solution in which the melt of the eutectic alloy and the solvent are pre-mixed and the melt of the eutectic alloy is pre-dispersed in the solvent.
[4] The fourth aspect of the present invention is the method for continuously producing eutectic alloy fine particles according to [1] or [2], wherein

the fluid to be processed includes a first fluid and a second fluid,
of the first fluid and the second fluid, one of the fluids contains the melt of the eutectic alloy, and the other fluid contains the solvent.

[5] The fifth aspect of the present invention is the method for continuously producing eutectic alloy fine particles according to [4], wherein
the atomizer used in the producing method is provided with at least two introduction ports in the circular flow path; one introduction port is an opening connected to the circular flow path which introduces the first fluid from inside the circular flow path, and the other introduction port opens in the middle of the circular flow path, the second fluid is joined with the first fluid that has become a thin film fluid by being forced by the at least two processing surfaces, so that dispersion treatment is carried out to the fluid to be processed between the at least two processing surfaces.

[6] The sixth aspect of the present invention is the method for continuously producing eutectic alloy fine particles according to [1] or [2], wherein

a particle diameter of the melt of the eutectic alloy in droplet state is reduced by increasing a viscosity of the solvent introduced between the at least two processing surfaces.

[7] The seventh aspect of the present invention is the method for continuously producing eutectic alloy fine particles according to [1] or [2], wherein a particle diameter of the melt of the eutectic alloy in droplet state is increased by reducing a viscosity of the solvent introduced between the at least two processing surfaces.

[8] The eighth aspect of the present invention is the method for continuously producing eutectic alloy fine particles according to [1] or [2], wherein a value of a coefficient variation (CV) of a particle diameter of the solid eutectic alloy fine particles is 0.4 or less.

[9] The ninth aspect of the present invention is the method for continuously producing eutectic alloy fine particles according to [1] or [2], wherein an average circularity of the solid eutectic alloy fine particles is 0.85 or more.

[10] The tenth aspect of the present invention is the method for continuously producing eutectic alloy fine particles according to [1] or [2], wherein

the solvent is in a liquid state in the range of -20°C to +30°C of the melting point of the eutectic alloy, and the solvent does not dissolve the eutectic alloy.

[11] The eleventh aspect of the present invention is the method for continuously producing eutectic alloy fine particles according to [1] or [2], wherein

the solid eutectic alloy fine particles are solder alloy fine particles, lead-free solder alloy fine particles, or low boiling-point alloy fine particles.

EFFECTS OF THE INVENTION

According to the present invention, eutectic alloy fine particles easily controlled in the particle diameter can be continuously produced. The eutectic alloy fine particles produced by the present invention have a narrow particle size distribution and high average circularity, so that the classification step can be omitted and the desired eutectic alloy fine particles could be produced with good efficiency.

BRIEF DESCRIPTION OF DRAWINGS

Fig. 1 is a schematic cross-sectional view of an atomizer used in implementation of the present invention.

Fig. 2(A) is a schematic plan view of the first processing surface of the atomizer shown in Fig. 1, and (B) is an enlarged view of the main part of the processing surface of the atomizer.

Fig. 3(A) is a cross-sectional view of a second introduction part of the atomizer, and (B) is an enlarged view of the main part of the processing surface for explaining the second introduction part.

Fig. 4 is a schematic diagram of the flow of the fluid to be processed in the rotation direction between the processing surfaces of the atomizer used in the implementation of the present invention.

Fig. 5 is a SEM image of SnBi alloy fine particles prepared in Example 3.

Fig. 6 is a SEM image of SnBi alloy fine particles prepared in Example 4.

EMBODIMENTS TO CARRY OUT THE INVENTION

Hereinafter, an example of an embodiment of the present invention will be taken based on the drawings and explained.

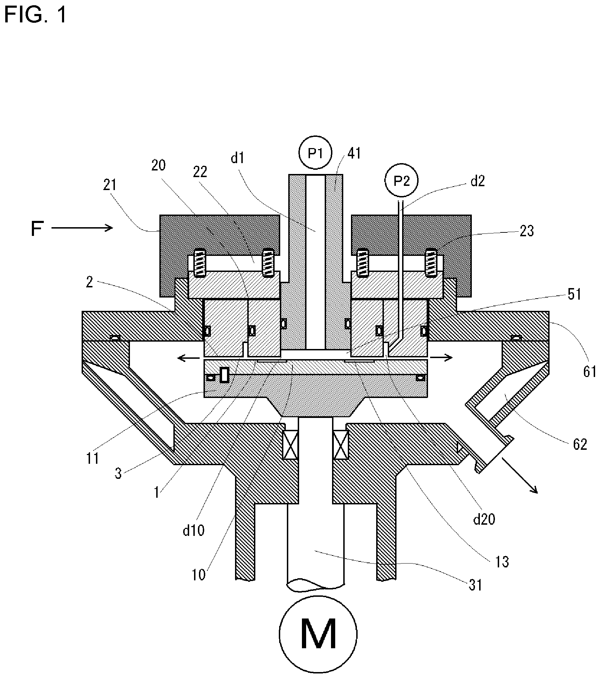

With regard to an atomizer suitable for implementing the method for continuously producing eutectic alloy fine particles according to the present invention, it will be explained below by referring to Fig. 1 to Fig. 4.

An atomizer (hereinafter also referred to as a fluid processing device F) suitable for implementation of the present invention is similar to the device described in Patent Document 6, in which fluid processing such as mixing, reacting is carried out on the fluid to be processed in a circular flow path formed between processing surfaces in the processing members, at least one of which is capable of approaching to and separating from the other and rotates relative to the other. The fluid processing is carried out by introducing one or more fluids to be processed between processing surfaces, and the fluids to be processed are mixed and stirred between the processing surfaces. A first fluid, which is a first fluid to be processed, is introduced between the processing surfaces, and a second fluid to be processed is introduced as a second fluid into between the processing surfaces from another flow path, which is independent of the flow path through which the first fluid is introduced and provided with an opening leading between the processing surfaces, the first fluid and the second fluid are mixed and stirred between the processing surfaces to carry out the fluid processing. In this device, at least one of the processing members rotates to the other processing member, and the rotation speed and/or the distance between the processing surfaces may be appropriately changed.

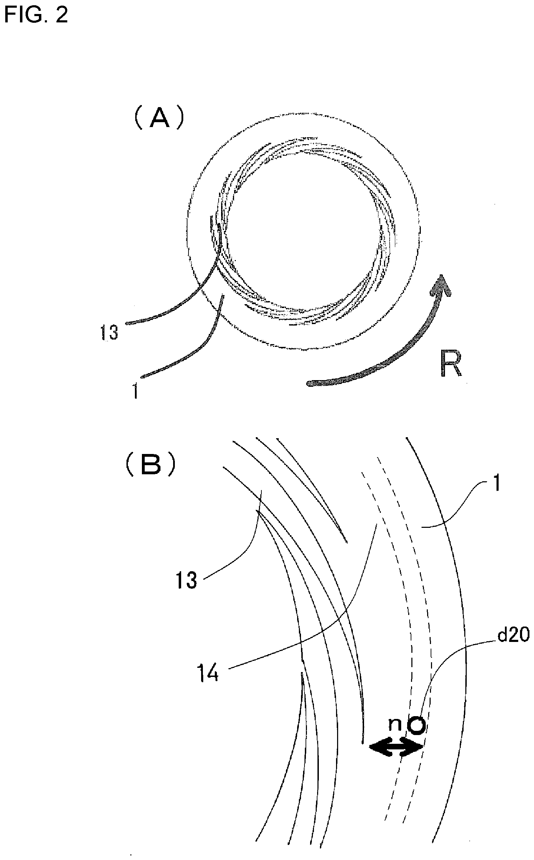

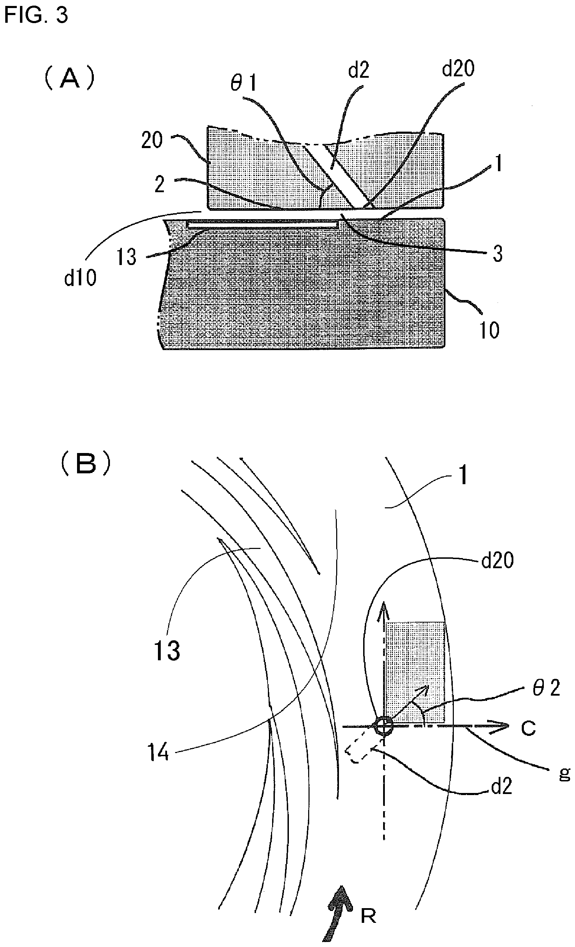

In Fig. 1, the upper and lower relationship of the figure corresponds to that of the apparatus. In the fluid processing device F suitable for implementing the present invention, the relationships between upper and lower, front and rear, and right and left merely indicate the relative positional relationships thereof, not indicating the absolute positions thereof. In Fig. 2(A) and Fig. 3(B), R indicates a rotational direction. In Fig. 3(B), C indicates a centrifugal direction (radial direction).

Processing Surface

The fluid processing apparatus F is provided with two processing members, the first and the second processing members 10 and 20, which are disposed in a position they are faced with each other, wherein at least one processing member rotates. The faces of the processing members 10 and 20 which are faced with each other serve as the respective processing surfaces. The first processing member 10 is provided with the first processing surface 1 and the second processing member 20 is provided with the second processing surface 2.

The processing surfaces 1 and 2 define the circular flow path 3, and in the circular flow path 3, processing of the fluids such as mixing of the fluids to be processed is carried out. The circular flow path 3 is an annular space.

The distance between the processing surfaces 1 and 2 may be arbitrarily changed, wherein the distance is usually adjusted very narrow to 1 mm or less, for example, in the range of 1 $\mu$m to 1 mm. By so doing, the fluids to be processed that pass through between the processing surfaces 1 and 2 become a forced thin film fluid forced by the processing surfaces 1 and 2.

In the case where plural fluids to be processed including the first fluid and the second fluid are processed by using the fluid processing apparatus F, the fluid processing apparatus F is connected to the flow path of the first fluid, which is introduced the circular flow path 3 defined by the processing surfaces 1 and 2 from the upstream end (in this example, from an inner side of the circle). With this, the circular flow path 3 forms part of the flow path of the second fluid, different from the first fluid. Then, both the fluids to be processed, i.e., the first fluid and the second fluid, are mixed in the circular flow path 3 between the processing surfaces 1 and 2 thereby carrying out the fluid processing such as a reaction.

To specifically explain, the fluid processing apparatus F is provided with the first holder 11 to hold the first processing member 10, the second holder 21 to hold the second processing member 20, the surface-contacting pressure imparting mechanism, the rotation drive mechanism M, the first introduction part d1, the second introduction part d2, and the fluid pressure imparting mechanisms P1 and P2.

In this embodiment, the second processing member 20 is disposed above the first processing member 10, the lower surface of the second processing member 20 is the second processing surface 2, and the upper surface of the first processing member 10 is the first processing surface 1.

As shown in Figure 1, in this embodiment, the first processing member 10 is a disk without an opening in the center. The second processing member 20 is a circular body, more specifically, a ring-shaped disk. In this embodiment, since the first processing surface 1 is disc-shaped and the second processing surface 2 is circular, the space defined between the processing surfaces 1 and 2 constitutes a circular space, i.e., circular flow path 3. The second processing member 20 may be in the shape of disk without an opening in the center, provided that it can introduce the fluid to be processed, including the first fluid and the second fluid.

The first and second processing members 10 and 20 may be composed of a single member or a combination of plural members, wherein the construction material thereof may be ceramics such as silicon carbide (SiC), a sintered metal, an abrasion-resistant steel, sapphire, a metal subjected to hardening treatment, or a hard material subjected to lining, coating, or plating treatment, besides a metal. In this embodiment, at least part of the first and second processing surfaces 1 and 2 is mirror-polished.

Rotation of Processing Surface

At least any one of the first holder 11 and the second holder 21 rotates relative to the other holder by the rotation driving mechanism M such as an electric motor. The driving axis of the rotation driving mechanism M is connected to the rotation axis 31; and in this embodiment, the first holder 11 attached to the rotation axis 31 rotates, and the first processing member 10 which is supported by the first holder 11 rotates relative to the second processing member 20. As a matter of fact, the second processing member 20 may be rotated, or the both may be rotated as well.

Approach and Separation of the Processing Surfaces

At least any one of the first processing member 10 and the second processing member 20 is able to approach to and separate from at least any other processing member in the axial direction of the rotation axis 31, so that the processing surfaces 1 and 2 can approach to and separate from each other.

In this embodiment, the first processing member 10 is configured such that it is fixed in the axial direction but rotates in the circumferential direction. To this first processing member 10, the second processing member 20 approaches and separates in the axial direction, and the second processing member 20 is retractably stored in the storing member 22 which is disposed in the second holder 21.

Meanwhile, the second processing member 20 may be disposed in the storing member 22 of the second holder 21 such that it is movable in parallel to the axial direction; but it may also be stored with a large clearance, and the second processing member 20 may be held with a floating mechanism so as to be able to displace three-dimensionally.

Fluid Pressure Imparting Mechanism

The fluids to be processed (in this example, the first fluid and the second fluid) are supplied to the fluid processing device F by means of the fluid pressure imparting mechanisms P1 and P2. With regard to the fluid pressure imparting mechanisms P1 and P2, various pumps may be used, and the fluid to be processed can be supplied to the fluid processing device F at a predetermined pressure. In order to suppress pulsation during pumping, the pressure imparting mechanism equipped with a pressure vessel as the fluid pressure imparting mechanisms P1 and P2 may also be employed. A pressurizing gas is introduced the pressure vessel in which the fluid to be processed is stored; and by means of this pressure the fluid to be processed can be transferred by pressing out the fluid to be processed.

Movement of Fluid to be Processed

The fluids to be processed receive pressures by the fluid pressure imparting mechanisms P1 and P2. Under this pressurized state, the fluids to be processed including the first fluid and the second fluid are introduced between the processing surfaces 1 and 2 through the first introduction part d1 and the second introduction part d2, respectively.

In this embodiment, the first introduction part d1 is a flow path which penetrates the central part 41 in an axial direction, the central part being in the center of the circular second holder 21; and the lower end thereof is connected to the cylindrical stirring space 51, and the first fluid is introduced between the processing surfaces 1 and 2 from inside of the radial direction of the circular flow path 3.

The second introduction part d2 is a flow path disposed in the second processing member 20, wherein one end thereof is open in the second processing surface 2, and this opening is the direct introduction opening (second introduction port d20) to the circular flow path 3.

The first fluid is introduced the circular flow path 3 from the first introduction part d1 through the clearance in the inner diameter side between the processing members 10 and 20 via the stirring space 51, wherein this clearance plays a role as the first introduction port d10. The first fluid that is introduced from the first introduction port d10 into the circular flow path 3 is made to a thin film fluid between the first processing surface 1 and the second processing surface 2, and then, it goes through toward an outer side of the processing members 10 and 20. The second fluid having been pressurized to a prescribed pressure is fed into between the processing surfaces 1 and 2 through the second introduction port d20 of the second introduction part d2, and then, it is joined therein to the first fluid having been made to the thin film fluid; and, while or after they are mixed with each other mainly with molecular dispersion, and fluid processing such as emulsification, dispersion, reaction, crystallizing, crystallization, precipitation is performed.

The thin-film fluid formed from the first fluid and the second fluid is discharged in a mist state from the processing surfaces 1 and 2 (in this example, between the outer circumferential ends of the processing surfaces 1 and 2, that is, the downstream end of the circular flow path 3), to outside of the processing members 10 and 20 after subjected to the fluid processing. The fluid subjected to the fluid processing is recovered in a recovery tank via a vessel 61 equipped with a jacket arranged outside the processing members 10 and 20. Refrigerant or heat medium can be passed through the jacket 62.

Meanwhile, because the first processing member 10 rotates, the fluid to be processed in the circular flow path 3 does not move linearly from an inner side to an outer side thereof, but it moves from an inner side to an outer side almost spirally by action of a synthetic vector to the fluid to be processed, the synthetic vector being formed of the migration vector to a radius direction of a circle and the migration vector in a circumferential direction thereof.

Balance of Force

Next, the surface-approaching pressure imparting mechanism for imparting the force to the processing member exerting in the direction of approaching the first processing surface and the second processing surface 2 each other will be explained. In this embodiment, the surface-approaching pressure imparting mechanism is arranged in the second holder 21 and biases the second processing member 20 toward the first processing member 10. The surface-approaching pressure imparting mechanism is a mechanism to generate force (hereinafter, surface-approaching pressure) to press the first processing surface 1 of the first processing member 10 and the second processing surface 2 of the second processing member 20 in the direction to make them approach to each other. By the balance between the surface-approaching pressure and the force to separate the processing surfaces 1 and 2 from each other due to the fluid pressure imparting mechanisms P1 and P2, i.e., the force such as the fluid pressure, the mechanism generates a thin film fluid having minute thickness of 1 mm or less in the level of nm or $\mu$m. In other words, the distance between the processing surfaces 1 and 2 is kept in a predetermined minute distance by the balance between these forces.

In the embodiment shown in FIG. 1, the surface-approaching pressure imparting mechanism is arranged between the accepting part 22 and the second processing member 20. Specifically, the surface-approaching pressure imparting mechanism is composed of a spring 23 to bias the second processing member 20 toward the first processing member 10 and a fluid introduction part for back pressure (not shown in Figure) to introduce a fluid for back pressure such as air and oil, wherein the surface-approaching pressure is provided by the spring 23 and the fluid pressure of the fluid for back pressure. The surface-approaching pressure may be provided by at least any one of this spring 23 and the fluid pressure of the fluid for back pressure; and other forces such as magnetic force and gravitation may also be used.

The fluid pressure of the fluid for back pressure can be set to 0 to 0.5 MPaG, preferably 0 to 0.4 MPaG, and more preferably 0 to 0.3 MPaG, and for the spring 23, it can be set to 0 to 0.4 MPaG, and preferably 0 to 0.3 MPaG.

The second processing member 20 recedes from the first processing member 10 thereby making a minute space between the processing surfaces by separating force, caused by viscosity and the pressure of the fluid to be processed applied by the fluid pressure imparting mechanisms P1 and P2, against the bias of this surface-approaching pressure imparting mechanism. By this balance between the surface-approaching pressure and the separating force as mentioned above, the first processing surface 1 and the second processing surface 2 can be set with the precision of a micrometer level; and thus, the minute space between the processing surfaces 1 and 2 may be set. The separating force mentioned above includes fluid pressure and viscosity of the fluid to be processed, centrifugal force by rotation of the processing members, negative pressure when negative pressure is applied to the fluid introduction part for back pressure, and spring force when the spring 23 works as a pulling spring. This surface-approaching pressure imparting mechanism may be arranged in the first processing member 10 not in the second processing member 20, or may be arranged in both.

At least any one of the first and second processing members 10 and 20 may be installed a temperature adjustment mechanism to adjust the temperature of the processing surfaces 1 and 2 or therebetween by cooling or heating. Examples of the temperature adjustment mechanism may be mentioned cooling elements, heating elements, and piping passing through refrigerant or heat medium.

Depression and Micro-pump effect

As shown in FIG. 2, in the first processing surface 1 of the first processing member 10, a groove-like depression 13 extended toward an outer side from the central part of the first processing member 10, namely in a radius direction, may be formed. The depression 13 may be, as a plane view, curved or spirally extended on the first processing surface 1 as shown in FIG. 2(B), or though not shown in the drawing, may be extended straight radially, or bent at a right angle, or jogged; and the concave portion may be continuous, intermittent, or branched. In addition, this depression 13 may be formed also on the second processing surface 2, or on both the first and second processing surfaces 1 and 2. By forming the depression 13 as mentioned above, the micro-pump effect can be obtained so that the fluid to be processed may be sucked into between the first and second processing surfaces 1 and **2.**

It is preferable that the base end of the depression 13 reach the space 51. The front end of the depression 13 extends toward the outer circumferential direction of the first processing member 10, and the depth thereof (cross-section area) may be gradually decreased as going from the base end toward the front end thereof.

Between the front end of the depression 13 and the outer circumferential surface 11 of the first processing member 10, a flat surface 14 not having the depression 13 is provided.

Rotation Speed and Fluid Reaction

When the second introduction port d20 of the second introduction part d2 is arranged in the second processing surface 2, it is preferable to provide in the position facing the flat surface 14 of the first processing surface 1.

This second introduction port d20 is arranged preferably in the downstream (outside in this case) of the depression 13 of the first processing surface 1. The second introduction port d20 is arranged especially preferably at a position opposite to the flat surface 14 located nearer to the outer diameter than a position where the direction of flow upon introduction of the first fluid by the micro-pump effect into the circular flow path 3 is changed to the direction of a spiral and laminar flow formed between the processing surfaces. Specifically, in FIG. 2(B), a distance n from the outermost side of the depression 13 arranged in the first processing surface 1 in the radius direction is preferably about 0.5 mm or more. It is preferable that mixing of a plurality of fluids to be processed due to the molecular dispersion as well as fluid processing such as emulsification, dispersion, reaction, crystallizing, crystallization and separation under laminar flow conditions.

In order to carry out the processing of the fluids to be processed under the laminar flow condition, a rotation speed of the first processing surface 1 is suitably 6,000 rpm or less, and a rotation speed of the first processing surface 1 is preferably 200 to 6,000 rpm, more preferably 350 to 5,000 rpm (peripheral speed at the outer circumference: 1.8 to 26.3 m/sec). Rotating a higher speed than this will result in turbulent flow conditions, and as a result, for example, the encounter of a plural kinds of substances contained in the first fluid and the second fluid to be reacted between the processing surfaces 1 and 2 becomes random, so that there is a risk that it may difficult to achieve a homogeneous reaction or separation of uniform particles.

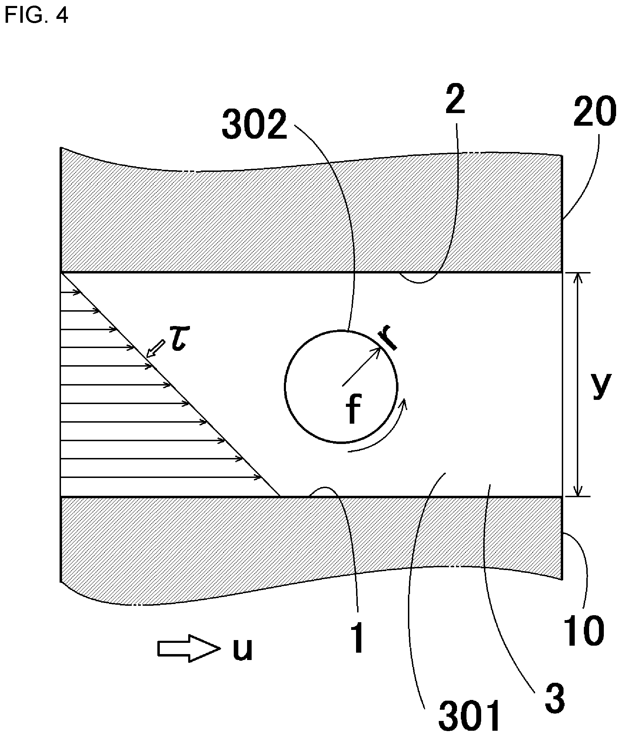

Here, the flow of the fluid to be processed in the rotational direction between the processing surfaces 1 and 2 of the fluid processing device F, namely, the thin-film fluid 301 will be explained by using Fig. 4.

During operation of the fluid processing device F, at least one of the processing surfaces 1 and 2 rotates relative to the other, and in this embodiment, the second processing member 20 does not rotate and the first processing member 10 rotates at speed u [m/s].

As mentioned above, the distance y between the processing surfaces 1 and 2 of the fluid processing device F is usually 1 mm or less, and is adjusted, for example, from 1 $\mu$m to 1 mm.

In the fluid movement, the dimensionless number representing the ratio of inertial force and viscous force is called Reynolds number Re, and the Reynolds number Re is expressed by the following formula (1).

Reynolds number Re=Inertial force/Viscous force=p•L•u=L·u/v                    Formula (1)

Here, $\rho$ indicates fluid density [kg/m$^3$], L indicates representative length [m], u: representative velocity [m/s], $\mu$: viscosity [Pa•s] and $v=\mu/\rho$ is kinetic viscosity [m$^2$/s].

The distance between the processing surfaces 1 and 2 of the fluid processing device F is usually adjusted to 1 mm or less, for example, a minute distance of from about 1 $\mu$m to 1 mm, so that the amount of fluid held between the processing surfaces 1 and 2 is extremely small. Therefore, the representative length L becomes very small, the centrifugal force of the thin-film fluid passing through between the both processing surfaces 1 and 2 is small, and the effect of viscous force becomes large in the thin-film fluid. Therefore, the Reynolds number becomes small and the thin-film fluid becomes laminar flow.

The centrifugal force is a kind of inertial force in rotation movement, and is the force that acts from the center outward. The centrifugal force is expressed by the following formula (2).

$$\texttt{Centrifugal force C = mr}\omega^2 \quad \texttt{Formula (2)}$$

Here, m represents mass, r represents radius, and $\omega$ represents angular velocity.

As mentioned above, the amount of the fluid held between the processing surfaces 1 and 2 is extremely small, so that the ratio of the velocity to the mass of the fluid becomes very large, and the mass is negligible. Therefore, the effect of gravity can be ignored in the thin-film fluid formed between the processing surfaces 1 and 2.

In the range where the Reynolds number Re is small, the fluid and the respective particles contained in the fluid are said to flow in an orderly manner and are to be in a laminar flow state, in this case, mixing and diffusion are limited to the microscopic range, and all particles 302 having a radius r generated by fluid processing flow in the macroscopic flow direction, and a shear force $\tau$ is applied along the parallel direction of flow. The shear force $\tau$ is expressed by the following formula (3).

$$\texttt{Shear force } \tau=\mu\texttt{du/dy} \quad \texttt{Formula (3)}$$

(Here, y is illustrated in coordinates perpendicular to the fluid flow.)

When the Reynolds number Re becomes large to a certain extent, the flow becomes unsteady and transitions to turbulent flow.

Normally, when the Reynolds number Re is about 2,000 to 4,000, a transition to turbulent flow occurs, and in the case of the present invention, the Reynolds number Re is preferably 200 or less (Re≦200), more preferably the Reynolds number Re is 100 or less (Re≦100), and optimally the Reynolds number Re is 50 or less (Re≦50), and as the smaller the Reynolds number Re is, the more uniform the particle diameter becomes.

To explain the uniformity of the particle diameter of the particles 302, as the smaller the Reynolds number Re is, the more uniform the fluid flow becomes, and the more uniform the fluid flow becomes, the more constant the flow becomes, and uncertain factors such as vortexes are reduced. Accordingly, as the smaller the Reynolds number Re is, the more uniform respective particles contained in the fluid becomes, and as a result, the particle diameter of the particles 302 becomes uniform.

From the formulae (1) and (3), as the viscosity increases, the shear force $\tau$ increases, but the Reynolds number Re decreases. In the embodiment, the first processing member 10 rotates relative to the second processing member 20, and the particles 302 with radius r generated by the fluid processing shown in Fig. 4 are subjected to shear force as shown in the drawing, but the lower side of the particles 302 receives the greater shear force. As a result, the smaller the Reynolds number Re is, the greater the rotational force f is generated from the lower side to the upper side, causing the particles 302 to rotate greatly and become particles having high circularity. For example, if the other conditions in the formula (3) are held constant, controlling the viscosity of the thin-film fluid 301 leads to control of the particle diameter of the particles 302 and high circularity of the particles 302. Even when the other conditions in the formula (3) are not constant, in the case that the change amount in viscosity of the thin-film fluid 301 is greater than the change amount in the other conditions, controlling the viscosity of the thin-film fluid 301 will lead to control of the particle size of the particles 302 and a higher circularity of the particles 302.

Specifically, as shown in Fig. 4, the second processing member 20 does not rotate and the first processing member 10 rotates at a rate of u [m/s], when the first processing member 10 rotates relative to the second processing member 20 and slippage is assumed to be 0 (zero), the vector of the fluid flow is 0 (zero) on the second processing surface 2, and is u on the first processing surface 1. The vector indication is the arrow on the left side of Fig. 4. According to this, the lower side of the particle 302 receives a large shear force and rotates, and the particle that receives a large rotational force becomes circular.

Incidentally, in the Example described later, even though the viscosity of the thin-film fluid is changed by changing the viscosity of the solvent which is one fluid to be processed introduced between the processing surfaces 1 and 2 of the fluid processing device F, not much change in the average circularity of the obtained eutectic alloy fine particles was observed. This is because the average circularity of the eutectic alloy fine particles obtained in Example is approximately 0.89 to 0.91, and the fine particles with an average circularity of 0.89 or more are sufficiently spherical, so that it is believed that the circularity of the eutectic alloy fine particles obtained in Example is in a saturated state.

As mentioned above, the flow transitions to turbulence when the Reynolds number Re is about 2,000 to 4,000. Under turbulent flow conditions, for example, the encounter of a plural kinds of substances contained in the first fluid and the second fluid to be reacted between the processing surfaces 1 and 2 becomes random, so that there is a risk that it may difficult to achieve a homogeneous reaction or separation of uniform particles.

On the other hand, under laminar flow conditions, the processing fluid is carried out while or after mixing by molecular dispersion, and when separation is accompanied, uniform particles are produced. To obtain uniform particles, fluid processing under laminar flow conditions is preferable. Here, the emulsion is referred to a system in which one of the liquids (dispersed phase) is dispersed in the other (continuous phase) as micro-droplets, which are not miscible with each other, and in the present invention, it also includes a system in which a melt of a eutectic alloy is dispersed in a solvent which does not dissolve the eutectic alloy, as described later.

Then, fluid processing is carried out under laminar flow conditions between the processing surfaces 1 and 2 of the fluid processing device F, and in discharging the fluid subjected to the fluid processing in a mist state, it is focused on the shear force $\tau$ expressed by the formula (3) and the particle diameter and the circularity of the particles 302 formed in the thin-film fluid 301. In particular, the shear force that imparts rotation to the particles 302 generated in the thin-film fluid 301 is called the rotation imparting force, and the particles 302 to which the rotation imparting force is applied increase in circularity by rotating and the fluid containing the particles having high circularity is discharged in a mist state into a vessel 61 equipped with a jacket arranged on the outside of the processing members 10 and 20 from between the processing surfaces 1 and 2. The Reynolds number Re of the thin-film fluid suitable for the rotation imparting force is preferably 200 or less, more preferably 100 or less, and further preferably 50 or less. If the Reynolds number Re exceeds 200, it is not preferred since even if the fluid flow in the circular flow path 3 is a laminar flow, particles will break or turbulence will occur. The applicant of the present application has discovered a range of Reynolds number Re that narrows the particles size distribution of particles and increase the circularity of particles, and by carrying out fluid processing on the fluid to be processed between the processing surfaces 1 and 2 under a specific Reynolds number Re, particles having uniform particle diameter and increased in circularity are obtained, and the fluid 300 containing the said particles is discharged in a mist state into the vessel 61 equipped with the jacket.

Second Introduction Part

The shape of the second introduction port d20 may be as shown in Fig. 2(B) and Fig. 3(B), an independent opening having a shape such as a circular, or may be a continuous opening having a shape such as a concentric circular ring-shape surrounding the central opening of the second processing surface 2 that is a ring-like disk. In the case that the shape of the second introduction port d20 is the circular ring-shaped, the opening of the circular ring-shaped may be continuous over the entire circumference or may be partially discontinuous.

When the circular ring-shaped second introduction port d20 is arranged in concentrically surround the central opening of the second processing surface 2, the second fluid can be processed under the same condition in the circumferential direction upon introduction this between the processing surfaces 1 and 2, thus, when producing the mass production of particles, it is preferable that the shape of the opening be a concentric circular ring-shape.

This second introduction part d2 may have directionality. For example, as shown in FIG. 3(A), the direction of introduction from the second introduction port d20 of the second processing surface 2 is inclined at a predetermined elevation angle ($\theta$1) relative to the second processing surface 2. The elevation angle ($\theta$1) is set at more than 0° and less than 90°, and when the reaction speed is high, the angle ($\theta$1) is preferably set in the range of 1 degree to 45 degree.

In addition, as shown in FIG. 3(B), in the case that the second introduction port is an independent opening hole, this may have directionality in a plane along the second processing surface 2. The direction of introduction of this second fluid is in the outward direction departing from the center in a radial component of the processing surface and in the forward direction in a rotation component of the fluid between the rotating processing surfaces. In other words, a predetermined angle ($\theta$2) exists facing the rotation direction R from a reference line g, which is the line to the outward direction and in the radial direction passing through the second introduction port d20. This angle ($\theta$2) is also set preferably at more than 0 degree and less than 90 degrees.

Kinds of Fluids to be Processed and Number of Flow Path

In the embodiment shown in FIG. 1, kinds of the fluid to be processed and numbers of the flow path thereof are set two respectively; but they may be one, or three or more. In the embodiment shown in FIG. 1, the second fluid is introduced the upstream-side processing space 3 from the second introduction part d2; but this introduction part may be arranged in the first processing member 10 or in both. Alternatively, a plurality of introduction parts may be arranged relative to one fluid to be processed. Each production port is not particularly restricted in its form, size, and number; and these may be changed as appropriate. Further, the introduction port may be arranged immediately before between the first and second processing surfaces 1 and 2, or even in the upstream side thereof. The expression "first" or "second" for each fluid has a meaning for merely discriminating an nth fluid among a plurality of the fluids present; and therefore, a third or more fluids can also exist. Each flow path is tightly sealed by liquid-tight (when the fluid to be processed is a liquid) or by airtight (when the fluid to be processed is a gas).

Fluid to be Processed

The fluid to be processed according to the present invention includes at least a melt of a eutectic alloy and a solvent. The melt of the eutectic alloy may be one fluid to be processed and the solvent may be the other fluid to be processed, or a dispersion solution in which the melt of the eutectic alloy and the solvent are premixed and the melt of the eutectic alloy is pre-dispersed in the solvent may be as the fluid to be processed. Here, the pre-dispersed dispersion (hereinafter also referred to as predispersion solution) refers to a dispersion solution prepared by pre-mixing the melt of the eutectic alloy and the solvent using a pre-disperser such as a high-speed rotary homogenizer and is not precisely dispersed. As the pre-disperser, example thereof may be mentioned CLEARMIX (manufactured by M Technique Co., Ltd.), which is a high-speed rotary disperser.

The fluid to be processed is introduced between the processing surfaces 1 and 2 of the fluid processing device F, and undergoes a dispersion process between the processing surfaces 1 and 2 of the fluid processing device F, and the melt of the eutectic alloy is dispersed in the solvent. Specifically, the fluid to be processed introduced between the processing surfaces 1 and 2 is subjected to dispersion treatment between the processing surfaces 1 and 2 of the fluid processing device F, the melt of the eutectic alloy forms droplets and the melt of the eutectic alloy is dispersed in the solvent as droplets. Accordingly, the melt of the eutectic alloy and the solvent are both in liquid dispersion state between the processing surfaces 1 and 2 of the fluid processing device F. The fluid that is dispersed between the processing surfaces 1 and 2 of the fluid processing device F and is discharged atomically between the processing surfaces 1 and 2 to the outside of the processing members 10 and 20 is cooled and the melt of the eutectic alloy in droplet state in the fluid is solidified to obtain solid eutectic alloy fine particles. Hereinafter, the melt of the eutectic alloy will be also referred to as the melt of the eutectic alloy that serves as a dispersoid, the solvent will be also referred to as the solvent that serves as a dispersion medium, and the dispersion in which the melt of the eutectic alloy is dispersed in form of droplets in the solvent will be also referred to as the dispersion in a state of liquid metal.

Solvent that Serves as Dispersant

The solvent served as a dispersion medium used in the present invention is not particularly limited as long as it can disperse the melt of the eutectic alloy served as a dispersoid as droplets of eutectic alloy fine particles, and is in a liquid state in the range of -20°C and +30°C of the melting point of the eutectic alloy to be used, and does not melt the eutectic alloy, and can be appropriately selected depending on the eutectic alloy used. "The solvent that serves as a dispersion medium does not dissolve the eutectic alloy" means that the volume of the eutectic alloy does not decrease by 10% or more due to ionization of the metals constituting the eutectic alloy in the solvent that serves as a dispersion medium. By changing the kind of the solvent being served as a dispersion medium variously, the particle diameter of the melt of the eutectic alloy that serves as a dispersoid, that is, the particle diameter of the melt of the eutectic alloy dispersed in the solvent in the form of droplets changes. This is because the interfacial tension between the melt of the eutectic alloy that serves as a dispersoid and the solvent that serves as a dispersion medium changes. For example, when silicone oil, which has good wettability with the eutectic alloy, in other words, low interfacial tension with the eutectic alloy, is used as the solvent served as a dispersion medium, the particle diameter of the melt of the eutectic alloy served as a dispersoid, that is, the particle diameter of the melt of the eutectic alloy dispersed in the solvent in the form of droplets can be reduced, and when liquid paraffin, which has a high interfacial tension with the eutectic alloy, is used as the solvent served as a dispersion medium, the particle diameter of the melt of the eutectic alloy dispersed in the solvent in the form of droplets can be increased. The particle diameter of the melt of the eutectic alloy dispersed in the solvent in the form of droplets also affects the particle diameter of solid eutectic alloy fine particles.

Examples of the solvent served as a dispersion medium may include, but are not particularly limited to, silicone oils such as dimethylpolysiloxane, and examples thereof KF-96-100cs, KF-96-1000cs, KF-96-3000cs, KF-96-5000cs, and KF-96H-10000cs; hydrocarbon solvents such as liquid paraffin; alcohol-based solvents such as ethanol, ethylene glycol, and glycerin; aqueous solvents such as water, ion-exchanged water, and pure water; aprotic polar solvents such as dimethylsulfoxide, and N-methyl-2-pyrrolidone; ketone-based solvents such as acetone, and 2-butanon; nitrile-based solvent such as acetonitrile; ester-based solvents such as ethyl acetate, and ethylene glycol monoethyl ether acetate; ether-based solvents such as diethyl ether, and tetrahydrofuran; aromatic-based solvents such as toluene, and xylene; amine-based solvents such as triethylamine, and ethylene diamine; amide-based solvents such as N,N-dimethylformamide; carboxylic acid-based solvent such as acetic acid, and propionic acid, and the like. When eutectic alloy fine particles with various particle diameters are desired to be produced, it is preferable to use silicone oil since those having various viscosities are commercially available, adjustment of the viscosity is easy, and wettability with metals is good. The solvent served as a dispersion medium may be used alone or in combination of two or more kinds.

Additives such as a surface protective agent to prevent metal oxidation and various dispersant may be added to the solvent that serves as a dispersion medium as needed. Examples of the additives may include polymers such as Tween 80 (polyoxyethylene sorbitan monooleate), hydroxypropyl methylcellulose, hydroxypropyl cellulose, polyvinylpyrrolidone, polyvinyl alcohol, sodium alginate, and fatty acid esters, which are also used as viscosity modifying substances as described later; anionic-based surfactants such as alkyl ammonium salts; cationic surfactants such as polyacrylates, alkyl sulfates, and phosphates; reducing agents such as ascorbic acid; anticorrosion agents such as amines; etching solutions for removing oxides on the surface; and surface modifiers such as silane coupling agents. For adjusting pH of the solvent, pH adjusting agents such as acids, bases may be added to the solvent that serves as a dispersion medium but it is preferable not to include additives that may dissolve and ionize the metal, such as 1% by weight or more of hydrochloric acid.

From the viewpoints of preventing oxidation of the solvent that serves as a dispersion medium and of preventing oxidation of the melt or droplets of the eutectic alloy, it is preferable to remove dissolved oxygen from the solvent that serves as a dispersion medium before introducing between the processing surfaces 1 and 2 of the fluid processing device F. The method for removing dissolved oxygen is not particularly limited, but examples thereof may include bubbling with inert gas such as argon gas or nitrogen gas, degassing by reduced pressure, degassing by heating, use of deoxygenating agent, and use of a commercially available solvent degassing equipment.

Eutectic Alloy

The melt of the eutectic alloy used in the present invention is a material in which the eutectic alloy is melted. The eutectic alloy used as a raw material in the present invention is not particularly limited, and may be a pure metal such as a low melting point metal described later. The eutectic alloy used in the present invention may include solder alloys such as SnPb alloy, SnBiPb alloy, SnBiPbIn alloy, SnAgPb alloy, SnSbPb alloy, SnAgBiPb alloy, and SnSbAgPb alloy; lead-free solder alloys such as SnBi alloy, SnAg alloy, SnAgCu alloy, SnCu alloy, SnIn alloy, SnSb alloy, SnZn alloy, SnBiZn alloy, SnCuSb alloy, SnBiAg alloy, SnBiCuIn alloy, SnCuNi alloy, SnZnIn alloy, SnAgBiCu alloy, SnAgCuIn alloy, SnBiAgIn alloy, SnAgCuSb alloy, SnAgCuBiIn alloy, SnAgCuNiGe alloy, AgBi alloy, ZnAl alloy, ZnAlSn alloy, AuSn alloy, AuSi alloy, and AuGe alloy; low melting point metals such as Ga, Sn, In, and Bi; low melting point alloys such as SnCr alloy, SnBiPbCd alloy (Wood's alloy, etc.), SnBiPbInCd alloy, and SnBiIn alloy; and mixtures thereof. In addition to commercially available eutectic alloys, those prepared by mixing the respective single metals in a desired ratio and melting the same may be used.

The temperature at which the eutectic alloy is melted is not particularly limited as long as it is equal to or higher than the melting point of the eutectic alloy to be used, but when the temperature at which the eutectic alloy is melted is a temperature close to the melting point of the eutectic alloy, there is a risk of solidifying the melt of the eutectic alloy in the fluid processing device F. When the temperature at which the eutectic alloy is melted is a temperature significantly higher than the melting point of the eutectic alloy, a large amount of energy is required at the time of melting the eutectic alloy, so that the temperature at which the eutectic alloy is melted is preferably 5°C or higher and 50°C or lower of the melting point of the eutectic alloy, more preferably 5°C or higher and 40°C or lower of the melting point of the eutectic alloy eutectic alloy, and further preferably 5°C or higher and 30°C or lower of the melting point of the eutectic alloy eutectic alloy. Here, the temperature at which the eutectic alloy is melted refers to the temperature at which the eutectic alloy is melted before being introduced the fluid processing device F. When melting the eutectic alloy in a tank, from the viewpoint of preventing oxidation of the eutectic alloy including the molten material, it is preferable to flow an inert gas such as argon gas or nitrogen gas into the tank into which the eutectic alloy is fed to replace the atmosphere.

The temperature when preparing dispersion solution in which the molten material at which the melt of the eutectic alloy is pre-mixed with the solvent using a pre-disperser such as a high-speed rotary homogenizer to pre-disperse the melt of eutectic alloy in the solvent is preferably 5°C or higher and 50°C or lower of the melting point of the eutectic alloy to be used, more preferably 5°C or higher and 40°C or lower, and further preferably 5°C or higher and 30°C or lower. When preparing the pre-dispersion solution in the tank, from the viewpoints of preventing oxidation of the eutectic alloy containing the molten material and preventing oxidation of the solvent that serves as a dispersion medium, it is preferable to flow an inert gas such as argon gas or nitrogen gas into the tank in which the eutectic alloy and the solvent that serves as a dispersion medium are fed to replace the atmosphere.

By changing the viscosity of the solvent that serves as a dispersion medium introduced between the processing surfaces 1 and 2 of the fluid processing device F, the particle diameter of the melt of the eutectic alloy that serves as a dispersoid, that is, the particle diameter of the melt of the eutectic alloy dispersed in the solvent in droplet state can be controlled. Here, the viscosity of the solvent that serves as a dispersion medium introduced between the processing surfaces 1 and 2 of the fluid processing device F refers to the viscosity of the solvent that serves as a dispersion medium at 150°C, for example, when the solvent that serves as a dispersion medium is introduced between the processing surfaces 1 and 2 at 150°C. There is no limit to the viscosity of the solvent served as a dispersion medium to be used, and by increasing the viscosity of the solvent that serves as a dispersion medium introduced between the processing surfaces 1 and 2 of the fluid processing device F, the particle diameter of the melt of the eutectic alloy that serves as a dispersoid, that is, the particle diameter of the melt of the eutectic alloy dispersed in the solvent in droplet state can be reduced. And, by decreasing the viscosity of the solvent that serves as a dispersion medium introduced between the processing surfaces 1 and 2 of the fluid processing device F, the particle diameter of the melt of the eutectic alloy that serves as a dispersoid, that is, the particle diameter of the melt of the eutectic alloy dispersed in the solvent in droplet state can be increased. Whereas this mechanism is not clear, but as shown in formula (3), for example, when the other conditions in formula (3) are kept constant or the change amount in the viscosity of the thin-film fluid 301 in formula (3) is made larger than the change amount of the other conditions, by increasing the viscosity of the solvent that serves as a dispersion medium introduced between the processing surfaces 1 and 2 of the fluid processing device F to increase the viscosity of the thin-film fluid, the shear force $\tau$ applied to the particles becomes large, and by decreasing the viscosity of the solvent that serves as a dispersion medium introduced between the processing surfaces 1 and 2 of the fluid processing device F to decrease the viscosity of the thin-film fluid, the shear force $\tau$ becomes small, however, the shear force $\tau$ exceeds the interfacial tension of the particles, that **is,** the interfacial tension of the melt of the eutectic alloy dispersed in the solvent in droplet state, the droplets of the eutectic alloy break up, so that it can be considered that when the shear force $\tau$ increases, the particle diameter of the melt of the eutectic alloy that serves as a dispersoid becomes small, and when the shear force $\tau$ decreases, the particle diameter of the melt of the eutectic alloy that serves as a dispersoid becomes large.

The viscosity of the solvent that serves as a dispersion medium introduced between the processing surfaces 1 and 2 of the fluid processing device F is preferably 0.1 to 10,000 mPa·s, more preferably 1 to 10,000 mPa·s, and further preferably 2 to 8,000 mPa·s. when the viscosity of the solvent that serves as a dispersion medium exceeds 10,000 mPa·s, the pressure of the fluid processing device F needs to be increased due to the effect of the feeding pressure of the fluid to be processed to the fluid processing device F.

The viscosity of the solvent that serves as a dispersion medium introduced between the processing surfaces 1 and 2 of the fluid processing device F can be changed by changing the kind of the solvent or the temperature of the solvent, or by adding a substance that adjusts the viscosity (viscosity modifying substance) in the solvent that serves as a dispersion medium whereby the viscosity of the solvent that serves as a dispersion medium may be changed.

The viscosity modifying substance is not particularly limited, and may include, in addition to polymers such as Tween 80 (polyoxyethylene sorbitan monooleate), hydroxypropyl methyl cellulose, hydroxypropyl cellulose, polyvinylpyrrolidone, polyvinyl alcohol, sodium alginate, and fatty acid ester; as well as polysaccharides such as xanthan gum as gelling agents, and gelatin, etc. These viscosity modifying substances may be used alone or may be used in combination of two or more kinds. In addition to the viscosity modifying substance, any other substances that can achieve viscosity thickening function or reducing function in relative relation to the viscosity of the solvent to which they are added may be appropriately employed. The viscosity modifying substances not only change the viscosity of the solvent that serves as a dispersion medium, but also can interact with the particles, that is, the melt of the eutectic alloy dispersed in the solvent in droplet state, and also can act as a surface protective agent and dispersant.

The viscosity of the solvent that serves as a dispersion medium may be determined by actually measuring the viscosity of the solvent that serves as a dispersion medium, or may be used the catalog value published in the manufacturer's catalog. The viscosity of the solvent that serves as a dispersion medium may be calculated from the catalog value of the kinematic viscosity of the solvent that serves as a dispersion medium. The viscosity of the solvent that serves as a dispersion medium may be measured at several temperatures, and the value interpolating from a graph plotting each data of the viscosities of the solvent that serves as a dispersion medium measured at several temperatures may be made the viscosity of the solvent that serves as a dispersion medium.

Measurement of the viscosity of the solvent that serves as a dispersion medium is not particularly limited, but it can be measured using various viscosity measurement devices, and an example of which include a cone-plate type viscometer and a cylindrical type viscometer may be mentioned.

Hereinafter, the method for the continuous production of eutectic alloy fine particles according to the present invention will be explained in more detail. However, the present invention is not limited only to the following embodiment.

As a fluid to be processed, a solvent that serves as a dispersion medium and a melt of the eutectic alloy that serves as a dispersoid are continuously introduced between the processing surfaces 1 and 2 of the fluid processing device F.

The temperature of the solvent that serves as a dispersion medium when being introduced between the processing surfaces 1 and 2 of the fluid processing device F is preferably -20°C or higher and +30°C or lower of the melting point of the eutectic alloy to be used, and more preferably -15°C or higher and +25°C or lower of the melting point of the eutectic alloy. When the temperature of the solvent that serves as a dispersion medium falls below -20°C of the melting point of the eutectic alloy to be used, the temperature of the thin-film fluid formed by joining the solvent that serves as a dispersion medium and the melt of the eutectic alloy that serves as a dispersoid between the processing surfaces 1 and 2 is lower than the melting point of the eutectic alloy, and there is a risk of solidifying the melt of the eutectic alloy between the processing surfaces 1 and 2 of the fluid processing device F. In addition, a large amount of energy is required to raise the temperature of the solvent that serves as a dispersion medium to a temperature significantly higher than the melting point of the eutectic alloy used (the temperature exceeding +30°C of the melting point of the eutectic alloy). For the same reason, the temperature of the melt of the eutectic alloy that serves as a dispersoid when being introduced between the processing surfaces 1 and 2 is preferably 5°C or higher and 40°C or lower of the melting point of the eutectic alloy used, and more preferably 5°C or higher and 30°C or lower of the melting point of the eutectic alloy used.

Even if the temperature of the solvent that serves as a dispersion medium when being introduced between the processing surfaces 1 and 2 of the fluid processing device F is -20°C of the melting point of the eutectic alloy used, it takes a certain amount of time for the temperature of the melt of the eutectic alloy to drop since the solvent and the melt of the eutectic alloy are actually mixed between the processing surfaces 1 and 2 and heat is transferred from the melt of the eutectic alloy to the solvent, so that the melt of the eutectic alloy does not solidify during the stay between the processing surfaces 1 and 2. The time that the fluid in which the solvent and the melt of the eutectic alloy are mixed between the processing surfaces 1 and 2 and subjected to dispersion treatment is discharged between the processing surfaces 1 and 2 in a mist state, that is, the time that the fluid in which the second fluid is introduced from the second introduction port d20 between the processing surfaces 1 and 2 and the fluid subjected to dispersion treatment is discharged from the processing surfaces 1 and 2 in a mist state is less than 1 second.

As mentioned above, a dispersion solution in which the melt of the eutectic alloy and the solvent are pre-mixed and the melt of the eutectic alloy is pre-dispersed in the solvent may be continuously introduced between the processing surfaces 1 and 2 of the fluid processing device F as the fluid to be processed. In order to prevent the melt of the eutectic alloy from solidifying between the processing surfaces 1 and 2, the temperature of the pre-dispersion solution at the time of introducing between the processing surfaces 1 and 2 of the fluid processing device F is preferably the melting point of the eutectic alloy or more and 50°C or lower of the melting point of the eutectic alloy.

Before introducing the solvent that serves as a dispersion medium and the melt of the eutectic alloy that serves as a dispersoid between the processing surfaces 1 and 2 of the fluid processing device F, it is preferable to warm up the space between the processing surfaces 1 and 2. Between the processing surfaces 1 and 2 can be warmed by incorporating a temperature adjustment mechanism in the processing members 10 and 20 to heat the processing members 10 and 20, or by introducing a solvent (hereinafter referred to as a temperature control solvent) for warming between the processing surfaces 1 and 2 in between the processing surfaces 1 and 2. It is preferable to use the solvent that serves as a dispersion medium exemplified above as the temperature control solvent, and the temperature of the temperature control solvent is preferably the melting point of the eutectic alloy or more and 40°C or lower of the melting point of the eutectic alloy. In addition, the temperature control solvent may be the same or different from the solvent that serves as a dispersion medium to be mixed with the melt of the eutectic alloy between the processing surfaces 1 and 2. For example, when the solvent that serves as a dispersion medium to be mixed with the melt of the eutectic alloy between the processing surfaces 1 and 2 is silicone oil, the same silicone oil as the solvent that serves as a dispersion medium may be used as the temperature control solvent, or silicone oil of the same kind as the solvent that serves as a dispersion medium and having a lower viscosity than that of the solvent that serves as a dispersion medium may be used as the temperature control solvent. In addition, when the solvent that serves as a dispersion medium to be mixed with the melt of the eutectic alloy between the processing surfaces 1 and 2 is pure water containing a viscosity modifying substance, pure water may be used as the temperature control solvent.

It is preferable that dissolved oxygen be removed from the temperature control solvent before being introduced between the processing surfaces 1 and 2 of the fluid processing device F. The method for removing dissolved oxygen is not particularly limited, but may be mentioned bubbling with an inert gas such as argon gas, nitrogen gas, degassing by reduced pressure, degassing by heating, using a deoxidizing agent, and using a commercially available solvent degassing device, etc.

The fluid to be processed introduced between the processing surfaces 1 and 2 becomes the thin-film fluid forced between the processing surfaces 1 and 2, and the fluid to be processed is mixed in the thin-film fluid. Between the processing surfaces 1 and 2, the solvent that serves as a dispersion medium and the melt of the eutectic alloy that serves as a dispersoid are both in liquid state, and the solvent that serves as a dispersion medium and the melt of the eutectic alloy that serves as a dispersoid are subjected to a dispersion treatment between the processing surfaces 1 and 2, and the melt of the eutectic alloy forms droplets and the melt of the eutectic alloy is dispersed in the solvent in the form of droplets. Accordingly, both of the solvent that serves as a dispersion medium and the melt of the eutectic alloy that serves as a dispersoid can be said to be in a dispersion state which is a liquid between the processing surfaces 1 and 2.

More specifically, either one of the solvents that serves as a dispersion medium and the melt of the eutectic alloy that serves as a dispersoid is made the first fluid, and the other of the solvent that serves as a dispersion medium and the melt of the eutectic alloy that serves as a dispersoid is made the second fluid. The first fluid is introduced between the processing surfaces 1 and 2 from the first introduction part d10 of the first introduction part d1, and the introduced first fluid becomes the thin-film fluid between the processing surfaces 1 and 2 and passing through outside of the processing members 10 and 20. The second fluid is a material introduced between the processing surfaces 1 and 2 from the second introduction port d20 of the second introduction part d2, and joins with the first fluid, which became the thin-film fluid and subjected to dispersion treatment while carrying out mixing or after subjecting to mixing, mainly by molecular diffusion, under laminar conditions, whereby the melt of the eutectic alloy is dispersed in the solvent in the form of droplets.

In order to achieve dispersion well of droplets of eutectic alloy in the solvent between the processing surfaces 1 and 2, the flow rate of the melt of the eutectic alloy that serves as a dispersoid introduced between the processing surfaces 1 and 2 is preferably less than or equal to the flow rate of the solvent that serves as a dispersion medium introduced between the processing surfaces 1 and 2, and more preferably the volume ratio of the solvent that serves as a dispersion medium to the melt of the eutectic alloy that serves as a dispersoid, that is, the flow rate of the solvent that serves as a dispersion medium to the melt of the eutectic alloy that serves as a dispersoid is 1 to 100.

In the fluid processing device F, changing the rotation speed and/or the contact pressure of at least one of the processing members, more specifically, changing the rotation speed and/or the contact pressure of at least one of the processing members to adjust the distance between the processing surfaces 1 and 2, it is possible to control the particle diameter and the particle size distribution of the produced eutectic alloy fine particles. Here, the contact pressure is, as mentioned above, the force applied to the first processing surface 1 of the first processing member 10 and the second processing surface 2 of the second processing member 20 in a direction in which they approach to each other. In the present embodiment, the first processing member 10 is rotated relative to the second processing member 20, and if the rotation speed of the first processing member 10 is increased, the speed u of the fluid passing between the processing surfaces 1 and 2 increases, while when the contact pressure is increased, that is, force is applied so as to narrow between the processing surfaces 1 and 2, the distance y between the processing surfaces 1 and 2 becomes smaller so that the shear force applied to the particles becomes larger. Therefore, if it is desired to make the particle diameter and the particle size distribution of the eutectic alloy fine particles small, the rotation speed and/or the contact pressure of the first processing member 10 is/are increased, while when it is desired to make the particle diameter and the particle size distribution of the eutectic alloy fine particles large, the rotation speed and/or the contact pressure the first processing member 10 is/are lowered.

The thin-film fluid formed by the first fluid and the second fluid is subjected to a dispersion treatment between the processing surfaces 1 and 2 and is discharged as a dispersion solution in which the melt of the eutectic alloy is dispersed in the solvent in droplets to the outside of the processing members 10 and 20 from between the processing surfaces 1 and 2 of the fluid processing device F as in a form of mist. By cooling the dispersion solution in the vessel 61 equipped with a jacket provided outside the processing members 10 and 20, droplets of the eutectic alloy discharged into the vessel 61 are solidified to form fine particles and are recovered in the recovery tank (not shown in the drawing) as the dispersion solution of the eutectic alloy fine particles. The refrigerant for cooling to be introduced the jacket 62 is not particularly limited as long as it can cool the droplets of the eutectic alloy to the temperature at which they solidify, and a refrigerant such as chilled water may be used or it may be a material utilizing air cooling or volatilization heat. The temperature in the vessel 61 equipped with a jacket is preferably the temperature lower than the melting point of the eutectic alloy, more preferably -20°C or lower of the melting point of the eutectic alloy, and further more preferably -30°C or lower of the melting point of the eutectic alloy. The atmosphere in the vessel 61 can be appropriately changed depending on the purpose, and from the viewpoint of preventing oxidation of the droplets of the eutectic alloy or the solidified eutectic alloy fine particles, it is preferably an inert atmosphere such as argon or nitrogen.

By rapidly solidifying the droplets of the eutectic alloy discharged into the vessel 61 in the vessel 61, fusion of the droplets is prevented, and although the densities of the liquid and solid are different, the particle diameter and circularity of the solidified eutectic alloy fine particles maintain the particle diameter and circularity of the droplets of the eutectic alloy discharged into the vessel 61.

The solidified eutectic alloy fine particles may contain impurities intentionally or unintentionally. As the impurities contained unintentionally, it is considered the foreign elements or oxides derived from the eutectic alloy used as a raw material.

From the viewpoints of preventing oxidation of the melt of the eutectic alloy, the solvent that serves as a dispersion medium, the droplets of the eutectic alloy and the solidified eutectic alloy fine particles, before introducing the fluid to be processed between the processing surfaces 1 and 2, it is preferable that an inert gas such as argon gas or nitrogen gas be flown into the fluid processing device F and in the recovery tank to replace the atmosphere inactive.

The solidified eutectic alloy fine particles are recovered in a state dispersed in a solvent that serves as a dispersion medium, and washing may be carried out, if necessary. There are no particular restrictions on the washing method. As the washing solvent, a solvent that is miscible with the solvent that serves as a dispersion medium may be used and, for example, in the case that silicone oil is used as the solvent that serves as a dispersion medium, a hydrocarbon-based solvent such as hexane that is miscible with silicone oil may be used, and in the case that an aqueous solvent such as an aqueous polymer solution is used as the solvent that serves as a dispersion medium, pure water miscible with the aqueous solvent or alcohol-based solvents such as methanol and ethanol that can dissolve polymers may be used. Also, various kinds of known methods such as decantation, centrifugation, filtration may be used for solvent replacement. The eutectic alloy fine particles after washing are preferably dried under an inert atmosphere.

The obtained eutectic alloy fine particles can be confirmed the particle diameter by the known methods. The confirmation method is not particularly limited, and various analysis methods such as microscopic observation and particle size distribution measurement can be used. When microscopic observation is carried out, depending on the particle diameter, observation is carried out using the optimum method such as optical microscope, electron microscope. For example, when using a scanning electron microscope (SEM), it can be magnified to a sufficient magnification to measure the particle diameter, and the surface state of the particles can also be confirmed.

The particle diameter of the obtained eutectic alloy fine particles is preferably 0.1 $\mu$m to 50 $\mu$m, more preferably 0.3 $\mu$m to 50 $\mu$m, and further preferably 0.5 $\mu$m to 45 $\mu$m. The reason for this is that particles larger than 50 $\mu$m are too large in the particle diameter for use in small electronic devices such as smartphones, while particles smaller than 0.1 $\mu$m have a large surface area relative to the mass of the particles, thus, the particles tend to easily oxidize and the amounts of active agents such as oxide removers added when made into a solder paste increase.

The average circularity of the obtained eutectic alloy fine particles is preferably 0.85 or more, more preferably 0.87 or more, and further preferably 0.89 or more. When the circularity is high, the particle appears a circle on the image, but is closer to a sphere in reality, and the surface area of the particle becomes smaller. By the matter, dispersion stability is improved and the particles tend to less oxidize, resulting in fewer defect when made into a paste.

The circularity is a value calculated by a formula (4) using the perimeter (L) and area (S) of a projected image of a certain particle, and the closer the value of the circularity is to 1, the closer the particle is to a spherical shape, and when the particle shape is a perfect sphere, the circularity becomes the maximum value of 1. Specifically, the circularity of each particle was calculated by the following procedure. Using the image analysis software iTEM (manufactured by Olympus Soft imaging Solutions GmbH), 10 points were taken on the surface of the particle, and the shape of the particle was approximated on the software. The circularity was calculated from the analyzed perimeter (L) and area (S). The average circularity is an average value of a plurality of circularities.

$$\text{Circularity} = 4\pi S/L^2 \qquad \text{Formula (4)}$$

The coefficient of variation (CV) of the particle diameter is an index that indicate the degree of uniformity of the obtained eutectic alloy fine particles, and can be calculated from the average particle diameter and standard deviation in the particle size distribution of the eutectic alloy fine particles with the formula: coefficient of variation (CV) = Standard deviation ÷ average particle diameter. The smaller the value of the coefficient of variation (CV) is, the narrower the distribution of the particle diameter of the eutectic alloy fine particles to be obtained is, and the uniformity of the eutectic alloy fine particles is high. Furthermore, the larger the value of the coefficient of variation (CV) is, the less uniformity as the eutectic alloy fine particles are, so that, for example, with industrial use, there is a case of causing problems that it is necessary to remove particles other than the eutectic alloy fine particles having a required particle diameter by classification.

The coefficient of variation (CV) of the particle diameter is preferably 0.4 or less, more preferably 0.35 or less, and further preferably 0.3 or less. According to this, a classification step is not required, a yield during the production increases and the cost can be reduced.

In the present invention, a eutectic alloy is dispersed as droplets in a molten state in a solvent between the processing surfaces 1 and 2, the dispersion solution in which the melt of the eutectic alloy is dispersed in droplet state in the solvent is discharged in the form of a mist from between the processing surfaces 1 and 2 to outside of the processing members 10 and 20, and the dispersion solution is cooled to solidify the droplets of the eutectic alloy, whereby it is more suitable for producing fine particles of eutectic alloys including solder alloys such as SnPb alloy, lead-free solder alloys such as SnBi alloy and SnAgCu alloy, and low-boiling point alloys such as Wood's alloy, etc., in which the liquid phase and the solid phase do not coexist, but melt completely to become liquid at a certain temperature, namely, at or above the temperature of the eutectic point, and completely solidify at the temperature lower than the eutectic point. It was confirmed that the particles obtained according to the present invention were eutectic alloy fine particles by measuring the melting temperature with a differential scanning calorimeter (DSC-60, manufactured by Shimadzu Corporation).

According to the method for producing eutectic alloy fine particles of the present invention, since the Reynolds number Re of the fluid to be processed between the processing surfaces 1 and 2 of the atomizer, that is, the thin-film fluid is as small as 200 or less, it can produce eutectic alloy fine particles having an average particle diameter of 0.1 $\mu$m or more and 50 $\mu$m or less, the value of the coefficient of variation (CV) of 0.4 or less, and the average circularity of 0.85 or more without performing the classification step.

EXAMPLES

Hereinafter, Examples of the present invention will be explained but the present invention is not limited to these Examples.

The particle diameter of the obtained eutectic alloy fine particles was, specifically, confirmed by the following procedure. The eutectic alloy fine particles after washing were dried at 25°C for 2 hours under an inert atmosphere to obtain a dry powder, the dried powder was adhered to a carbon tape and observed by scanning electron microscope (SEM, manufactured by JEOL Ltd., JSM-7500F). The observation conditions were an acceleration voltage of 5.0 kV and an observation magnification of 1,000 times or more. The long diameter of 100 eutectic alloy fine particles was measured from photographs taken at the optimum observation magnification according to the particle diameter, and the average particle diameter and the coefficient of variation (CV) were obtained. Further, the circularity of the obtained eutectic alloy fine particles was specifically calculated by the following procedure, and the circularity of 100 particles was averaged to obtain the average circularity. Using image analysis software iTEM (manufactured by Olympus Soft Imaging Solutions GmbH), 10 points were taken on the surface of the particle, and the shape of the particle was approximated on the software. The circularity was calculated from the analyzed perimeter (L) and area (S) using the formula (4).

$$\text{Circularity} = 4\pi S/L^2 \qquad \text{Formula (4)}$$

L: Perimeter of projected image of particle
S: Area

Also, in Examples, the spring 23 alone was used to apply the surface-approaching pressure (hereinafter referred to as back pressure).

Example 1

Pre-dispersion step:

Argon gas was fed to silicone oil (KF-96-100cs, available from Shin-Etsu Silicone Co., Ltd.) at 0.5 L/min and performed bubbling for more than 1 hour to remove dissolved oxygen. This silicone oil from which dissolved oxygen was removed was used as a solvent that serves as a dispersion medium and a temperature control solvent. 30 g of SnBi alloy (available from Kojundo Chemical Laboratory Co., Ltd., content ratio (hereinafter content ratio is weight ratio.), Sn:Bi=43:57, melting point 139°C) and 300 g of the above-mentioned silicone oil from which dissolved oxygen was removed as a solvent that serves as a dispersion medium, and argon gas were charged in a tank equipped with a jacket (not shown in the drawing), argon gas was flown into the tank at 200 mL/min to replace atmosphere at 20°C for 30 minutes. Then, heat medium was charged into the jacket to heat the tank, so that the SnBi alloy in the silicone oil was in a state of molten. The temperature inside the tank at this time was 170°C.

Thereafter, the silicone oil and the SnBi alloy were pre-mixed using a high-speed rotary disperser CLEAMIX (product name: CLM-2.2S, manufactured by M Technique Co., Ltd.) while maintaining the state of the temperature inside the tank at 170°C to prepare a pre-dispersion solution.

Step of particle production:

The pre-dispersion solution was introduced into the fluid processing device F to prepare a dispersion solution of the SnBi alloy fine particle. Specifically, argon gas was previously flown into the device F and the recovery tank at 200 mL/min at 20°C for 30 minutes to replace the atmosphere with an inert atmosphere, and then, the silicone oil (KF-96-100cs, available from Shin-Etsu Silicone Co., Ltd.) from which dissolved oxygen was removed was pumped into the device F as a temperature control solvent at 300 mL/min at approximately 160°C for 15 minutes to warm between the processing surfaces 1 and **2.** The back pressure was set to 0.08 MPaG, the pre-dispersion solution was introduced as a first fluid between the processing surfaces 1 and 2 from the first introduction part d1 at 0.25 MPaG, 50 mL/min and 150°C, and the pre-dispersion solution was mixed in the forced thin-film fluid while rotating the first processing member 10 at 5,000 rpm to prepare a dispersion solution of the SnBi alloy in a state of liquid metal between the processing surfaces 1 and 2. The dispersion in a state of liquid metal was discharged in the form of a mist from between the processing surfaces 1 and 2 of the fluid processing device F, the dispersion in a state of liquid metal was cooled in a vessel 61 equipped with a jacket provided outside of the processing members 10 and 20, and a dispersion solution of the SnBi alloy fine particles obtained by solidifying the droplets of the SnBi alloy was recovered in a recovery tank. The temperature of the refrigerant introduced a jacket 62 of the vessel 61 equipped with a jacket was 20°C.

Next, a portion of the recovered dispersion solution of the SnBi alloy fine particles was taken out and the particles were washed. As the washing solvent, hexane was used. The washed particles were dried at 25°C for 2 hours under an inert atmosphere to obtain a dry powder. The particle diameter of the obtained SnBi alloy fine particles was measured by SEM observation. The long diameter of the particles was measured at 100 locations at an accelerating voltage of 5.0 kV and an observation magnification of 1,000 times to obtain an average particle diameter and a coefficient of variation (CV). In addition, the average circularity was obtained using the procedure as mentioned above. The average particle diameter of the obtained SnBi alloy fine particles was 18 μm, the coefficient of variation (CV) was 0.21 and the average circularity was 0.90.

Example 2

Except that the silicone oil used for preparation of the pre-dispersion solution as the solvent that serves as a dispersion medium was changed from KF-96-100cs to KF-96-1000cs (available from Shin-Etsu Silicone Co., Ltd.) and the conditions for sending the pre-dispersion solution to the fluid processing device F were as shown in Table 1, a dispersion solution of the SnBi alloy fine particles and a dry powder were prepared in the same manner as in Example 1. The average particle diameter of the SnBi alloy fine particles was 13 μm, the coefficient of variation (CV) was 0.23, and the average circularity was 0.90.

Example 3

Preparation step of melt of eutectic alloy and removal of dissolved oxygen from solvent that serves as a dispersion medium and temperature control solvent:
A SnBi alloy (available from Kojundo Chemical Laboratory Co., Ltd., content ratio Sn:Bi=43:57, melting point 139°C) was charged in a tank equipped with a jacket (not shown in the drawing), and argon gas was flown in the tank with 200 mL/min to replace the atmosphere at 20°C for 30 minutes. Next, a heat medium was charged in the jacket to heat inside the tank to make the SnBi alloy in a molten state thereby producing a melt of the eutectic alloy. The temperature in the tank at this time was 167°C.

In addition, argon gas was fed to silicone oil (KF-96-100cs, available from Shin-Etsu Silicone Co., Ltd.) at 0.5 L/min and caried out bubbling for more than 1 hour to remove dissolved oxygen. This silicone oil from which dissolved oxygen was removed was used as a solvent that serves as a dispersion medium and a temperature control solvent.

Particle production step:

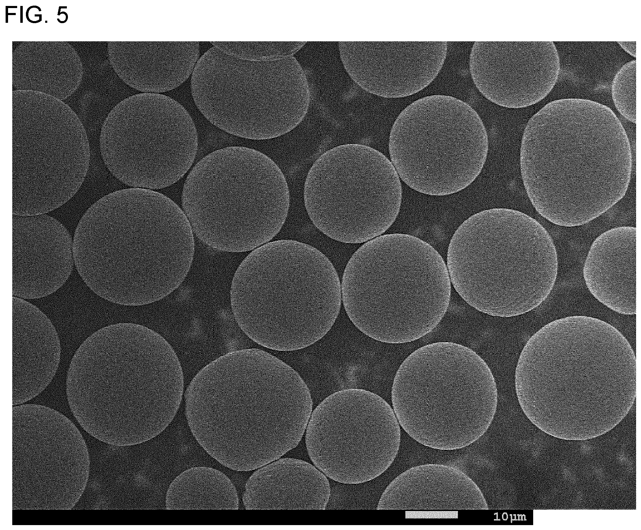

The silicone oil (KF-96-100cs, available from Shin-Etsu Silicone Co., Ltd.) from which dissolved oxygen was removed as a solvent that serves as a dispersion medium was mixed with the prepared melt of the eutectic alloy using a fluid processing device F to prepare a dispersion solution of the SnBi alloy fine particles. Specifically, argon gas was previously flown into the device F and the recovery tank at 200 mL/min at 20°C for 30 minutes to replace the atmosphere with an inert atmosphere, and then, the silicone oil (KF-96-100cs, available from Shin-Etsu Silicone Co., Ltd.) from which dissolved oxygen was removed was pumped into the device F as a temperature control solvent at 300 mL/min at approximately 160°C for 15 minutes to warm between the processing surfaces 1 and **2.** The back pressure was set to 0.08 MPaG, the silicone oil from which dissolved oxygen was removed was introduced as a first fluid between the processing surfaces 1 and 2 from the first introduction part d1 at 0.25 MPaG, 50 mL/min and 129°C, and the melt of the eutectic alloy prepared as a second fluid was introduced between the processing surfaces 1 and 2 from the second introduction part d2 at 0.15 MPaG, 30 mL/min and 150°C while rotating the first processing member 10 at 5,000 rpm, whereby the first fluid and the second fluid were mixed in the forced thin-film fluid to prepare a dispersion of the SnBi alloy in a state of liquid metal between the processing surfaces 1 and **2.** The dispersion in a state of liquid metal was discharged in the form of a mist from between the processing surfaces 1 and 2 of the fluid processing device F, the dispersion in a state of liquid metal was cooled in a vessel 61 equipped with a jacket arranged on the outside of the processing members 10 and 20, and a dispersion solution of the SnBi alloy fine particles obtained by solidifying the dropelets of the SnBi alloy was recovered in a recovery tank. The temperature of the refrigerant introduced the jacket 62 of the vessel 61 equipped with a jacket was 20°C. A dispersion solution of the SnBi alloy fine particles was partially taken out and the particles were washed with hexane. The washed particles were dried at 25°C for 2 hours under an inert atmosphere to obtain a dry powder. An SEM image of the dry powder of the SnBi alloy fine particles obtained in Example 3 is shown in Fig. 5. The average particle diameter of the obtained SnBi alloy fine particles was 19 $\mu$m, the coefficient of variation (CV) was 0.17 and the average circularity was 0.90.

Example 4

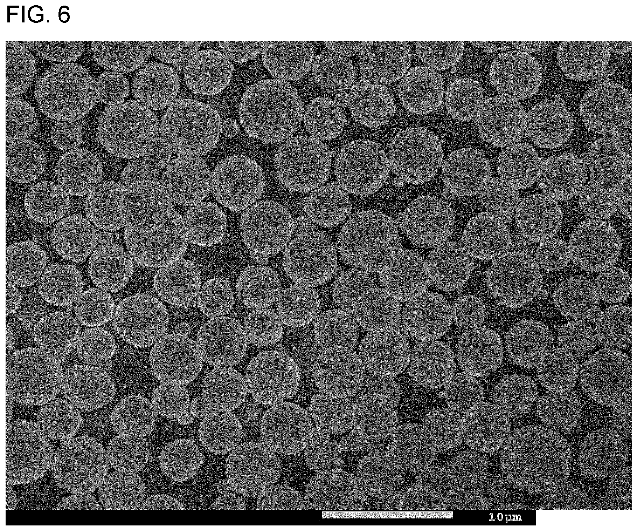

A dispersion solution of the SnBi alloy fine particles and a dry powder were prepared in the same manner as in Example 3, except that the silicone oil which is the first fluid was changed from KF-96-100cs (available from Shin-Etsu Silicone Co., Ltd.) to KF-96-5000cs (available from Shin-Etsu Silicone Co., Ltd.), and the condition of sending the first fluid and the second fluid to the fluid processing device F were the conditions as shown in Table 1. An SEM image of the dry powder of the SnBi alloy fine particles obtained in Example 4 is shown in Fig. 6. The average particle diameter of the SnBi alloy fine particles was 4.7 $\mu$m, the coefficient of variation (CV) was 0.23 and the average circularity was 0.90.

Example 5

A dispersion solution of the SnBi alloy fine particles and a dry powder were prepared in the same manner as in Example 3, except that the silicone oil which is the first fluid was changed from KF-96-100cs (available from Shin-Etsu Silicone Co., Ltd.) to centistokes viscosity liquid 3000cST (SN-6, available from AS ONE Corporation), and the conditions of sending the first fluid and the second fluid to the fluid processing device F were as shown in Table 1. The average particle diameter of the obtained SnBi alloy fine particles was 11 $\mu$m, the coefficient of variation (CV) was 0.21, and the average circularity was 0.91.

Example 6

A dispersion solution of the SnBi alloy fine particles and a dry powder were prepared in the same manner as in Example 3, except that the back pressure was set to 0.15 MPaG, the silicone oil which is the first fluid was changed from KF-96-100cs (available from Shin-Etsu Silicone Co., Ltd.) to KF-96H-6000cs (available from Shin-Etsu Silicone Co., Ltd.), and the conditions of sending the first fluid and the second fluid to the fluid processing device F were as shown in Table 1. The average particle diameter of the obtained SnBi alloy fine particles was 0.9 $\mu$m, the coefficient of variation (CV) was 0.35, and the average circularity was 0.90.

Example 7

A dispersion solution of SnAgCu alloy fine particles and a dry powder were prepared in the same manner as in Example 4, except that the eutectic alloy was changed from the SnBi alloy to SnAgCu alloy (content ratio Sn:Ag:Cu=96.5:3:0.5), and the conditions of sending the first fluid and the second fluid to the fluid processing device F were as shown in Table 1. A liquidus temperature of the SnAgCu alloy was 220°C, and the temperature in the tank when melting the SnAgCu alloy was at 250°C to prepare a melt of the eutectic alloy. Argon gas was previously flown into the device F and the recovery tank at 200 mL/min at 20°C for 30 minutes to replace the atmosphere with an inert atmosphere, and then, the silicone oil (KF-96-100cs, available from Shin-Etsu Silicone Co., Ltd.) from which dissolved oxygen was removed by argon bubbling (argon gas supply amount 0.5 L/min) for more than one hour was pumped into the device F at 300 mL/min for 15 minutes at approximately 260°C as a temperature control solvent to warm between the processing surfaces 1 and **2.** The average particle diameter of the obtained SnAgCu alloy fine particles was 5.5 $\mu$m, the coefficient of variation (CV) was **0.25,** and the average circularity was 0.90**.**

Example 8

A dispersion solution of Wood's alloy fine particles and a dry powder were prepared in the same manner as in Example 3, except that the first fluid was changed to liquid paraffin (available from FUJIFILM Wako Pure Chemical Corporation, first grade), the eutectic alloy was changed from the SnBi alloy to Wood's alloy (available from FUJIFILM Wako Pure Chemical Corporation, content ratio **Bi:Pb:Sn:Cd=50:24:14:12,** melting point about 70°C), and the conditions of sending the first fluid and the second fluid to the fluid processing device F were as shown in Table 1. Argon gas was previously flown into the device F and the recovery tank at 200 mL/min for 30 minutes at 20°C to replace the atmosphere with an inert atmosphere, and then, the liquid paraffin (available from FUJIFILM Wako Pure Chemical Corporation, first grade) from which dissolved oxygen was removed by argon bubbling (argon gas supply amount 0.5 L/min) for more than one hour was pumped into the device F as a temperature control solvent at 300 mL/min for 15 minutes at approximately 100°C to warm between the processing surfaces 1 and **2.** The temperature in the tank when melting the Wood's alloy was 115°C to prepare a melt of the eutectic alloy. The average particle diameter of the obtained Wood's alloy fine particles was 31 $\mu$m, the coefficient of variation (CV) was 0.25, and the average circularity was 0.89.

Example 9

A dispersion solution of Wood's alloy fine particles and a dry powder were prepared in the same manner as in Example 8, except that the first fluid was changed to a 1% by weight aqueous sodium alginate solution in which sodium alginate 500 to 600 (available from FUJIFILM Wako Pure Chemical Corporation, first grade) was dissolved in pure water with a concentration of 1% by weight, and the conditions of sending the first fluid to the fluid processing device F were as shown in Table 1. Argon gas was previously flown into the device F and the recovery tank at 200 mL/min for 30 minutes at 20°C to replace the atmosphere with an inert atmosphere, and then, pure water from which dissolved oxygen was removed by argon bubbling (argon gas supply amount 0.5 L/min) for more than one hour was pumped into the device F as a temperature control solvent at 300 mL/min for 15 minutes at about 100°C to warm between the processing surfaces 1 and 2. The particles was washed with pure water. The average particle diameter of the obtained Wood's alloy fine particles was 27 $\mu$m, the coefficient of variation (CV) was 0.28 and the average circularity was 0.89.

Example 10

A dispersion solution of Wood's alloy fine particles and a dry powder were prepared in the same manner as in Example 9, except that the first fluid was changed to a 3% by weight aqueous sodium alginate solution in which sodium alginate 500 to 600 (available from FUJIFILM Wako Pure Chemical Corporation, first grade) was dissolved in the pure water with a concentration of 3% by weight, and the conditions of sending the first fluid and the second fluid to the fluid processing device F were as shown in Table 1. The particles were washed with pure water. The average particle diameter of the obtained Wood's alloy fine particles was 10 $\mu$m, the coefficient of variation (CV) was 0.29 and the average circularity was 0.90.

Example 11

A melt of the eutectic alloy was prepared in the same manner as in Example 3 using SnBi alloy (available from Kojundo Chemical Laboratory Co., Ltd., content ratio Sn:Bi=43:57, melting point 139°C) to obtain a dispersion solution of SnBi alloy fine particles. Further, in the same manner as in Example 3, argon gas was fed to the silicone oil (KF-96-100cs, available from Shin-Etsu Silicone Co., Ltd.) at 0.5 L/min and carried out bubbling for more than 1 hour to remove dissolved oxygen. The silicone oil from which dissolved oxygen was removed was used as a solvent that serves as a dispersion medium and a temperature control solvent.

The prepared melt of the eutectic alloy and the silicone oil (KF-96-100cs, available from Shin-Etsu Silicone Co., Ltd.) from which dissolved oxygen was removed were mixed using a fluid processing device F to prepare a dispersion solution of the SnBi alloy fine particles. Specifically, argon gas was previously flown into the device F and the recovery tank at 200 mL/min for 30 minutes at 20°C to replace the atmosphere with an inert atmosphere, and then, the silicone oil (KF-96-100cs, available from Shin-Etsu Silicone Co., Ltd.) from which dissolved oxygen was removed was pumped into the device F as a temperature control solvent at 300 mL/min for 15 minutes at approximately 160°C to warm between the processing surfaces 1 and 2. The back pressure was set to 0.08 MPaG, the melt of the eutectic alloy prepared as a first fluid was introduced from the first introduction part d1 between the processing surfaces 1 and 2 at 0.15 MPaG, 30 mL/min and 150°C, while the silicone oil from which dissolved oxygen was removed was introduced as a second fluid from the second introduction part d2 between the processing surfaces 1 and 2 at 0.30 MPaG, 50 mL/min and 133°C, whereby the first fluid and the second fluid were mixed in the forced thin-film fluid while rotating the first processing member 10 at 5,000 rpm to prepare a dispersion solution of SnBi alloy in a state of liquid metal between the processing surfaces 1 and 2. The dispersion in a state of liquid metal was discharged in the form of a mist between the processing surfaces 1 and 2 of the fluid processing device F, the dispersion in a state of liquid metal was cooled in a vessel 61 equipped with a jacket arranged on the outside of the processing members 10 and 20, and a dispersion solution of the SnBi alloy fine particles obtained by solidifying the droplets of the SnBi alloy was recovered in a recovery tank. The temperature of the refrigerant introduced into the jacket 62 of the vessel 61 equipped with a jacket was 20°C. A dispersion solution of the SnBi alloy fine particles was partially taken out and the particles were washed with hexane. The washed particles were dried at 25°C for 2 hours under an inert atmosphere to obtain a dry powder. The average particle diameter of the obtained SnBi alloy fine particles was 14 $\mu$m, the coefficient of variation (CV) was 0.24, and the average circularity was 0.90.

Example 12

A dispersion solution of the SnBi alloy fine particles and a dry powder were prepared in the same manner as in Example 11, except that the second fluid was changed from the silicone oil (KF-96-100cs, available from Shin-Etsu Silicone Co., Ltd.) to liquid paraffin (SMOIL P55, available from MORESCO Corporation), and the conditions of sending the second fluid to the fluid processing device F were as shown in Table 1. Argon gas was previously flown into the device F and the recovery tank at 200 mL/min for 30 minutes at 20°C to replace the atmosphere with an inert atmosphere, and then, the liquid paraffin (SMOIL P55, available from MORESCO Corporation) from which dissolved oxygen was removed by argon bubbling (argon gas supply amount 0.5 L/min) for more than one hour was pumped into the device F as a temperature control solvent at 300 mL/min for 15 minutes at about 160°C to warm between the processing surfaces 1 and 2. The average particle diameter of the obtained SnBi alloy fine particles was 45 $\mu$m, the coefficient of variation (CV) was 0.18, and the average circularity was 0.90.

Example 13

A dispersion solution of the SnBi alloy fine particles and a dry powder were prepared in the same manner as in Example 11, except that the second fluid was changed from the silicone oil (KF-96-100cs, available from Shin-Etsu Silicone Co., Ltd.) to liquid paraffin (available from FUJIFILM Wako Pure Chemical Corporation, first grade), and the conditions of sending the first fluid and the second fluid to the fluid processing device F were as shown in Table 1. Argon gas was previously flown into the device F and the recovery tank at 200 mL/min for 30 minutes at 20°C to replace the atmosphere with an inert atmosphere, and then, the liquid paraffin (available from FUJIFILM Wako Pure Chemical Corporation, first grade) from which dissolved oxygen was removed by argon bubbling (argon gas supply amount 0.5 L/min) for more than one hour was pumped into the device F as a temperature control solvent at 300 mL/min for 15 minutes at about 160°C to warm between the processing surfaces 1 and 2. The average particle diameter of the obtained SnBi alloy fine particles was 33 $\mu$m, the coefficient of variation (CV) was 0.21, and the average circularity was 0.90.

Example 14

A dispersion solution of the SnBi alloy fine particles and a dry powder were prepared in the same manner as in Example 11, except that the second fluid was changed from the silicone oil (KF-96-100cs, available from Shin-Etsu Silicone Co., Ltd.) to a mixture of silicone oil and liquid paraffin, and the conditions of sending the first fluid and the second fluid to the fluid processing device F were as shown in Table 1. The mixture of the silicone oil and the liquid paraffin was prepared by mixing the silicone oil (KF-96-100cs (available from Shin-Etsu Silicone Co., Ltd.)), the silicone oil (KF-96-1000cs (available from Shin-Etsu Silicone Co., Ltd.)), and the liquid paraffin (available from FUJIFILM Wako Pure Chemical Corporation, first grade) with a weight ratio of 47:3:50 using a high-speed rotary disperser CLEAMIX (product name: CLM-2.2S, manufactured by M Technique Co., Ltd.). Argon gas was flown into the device F and the recovery tank at 200 mL/min for 30 minutes at 20°C in advance to replace the atmosphere with an inert atmosphere, and then, the silicone oil and the liquid paraffin from which dissolved oxygen was removed by argon bubbling (argon gas supply amount 0.5 L/min) for more than one hour was pumped into the device F as temperature control solvents at 300 mL/min for 15 minutes at approximately 160°C to warm between the processing surfaces 1 and 2. The average particle diameter of the obtained SnBi alloy fine particles was 25 $\mu$m, the coefficient of variation (CV) was 0.25, and the average circularity was 0.90.

Comparative Example 1

A SnBi alloy (available from Kojundo Chemical Laboratory Co., Ltd., content ratio Sn:Bi=43:57, melting point 139°C) was charged in a tank equipped with a jacket (not shown in the drawing), and argon gas was flown in the tank with 200 mL/min to replace the atmosphere at 20°C for 30 minutes. Next, a heat medium was charged in the jacket to heat inside the tank, and to make the SnBi alloy in a molten state to produce a melt of the eutectic alloy. The temperature in the tank at this time was 170°C. The melt of the eutectic alloy thus prepared was fed at about 500 mL/min and at 170°C to a disk-type atomizer (centrifugal powder manufacturing device, manufactured by Ducol Co., Ltd.) having a disk diameter of $\varphi$40 mm and rotating at 30,000 rpm. The fed melt of the eutectic alloy was sprayed in the form of droplets from the end of the rotating disk, and the SnBi alloy particles solidified in a vessel arranged on outside the disk-type atomizer were recovered and observed with SEM observation. The average particle diameter of the obtained SnBi alloy particles was 65 μm, the coefficient of variation (CV) was 0.80, and the average circularity was 0.82. Inside the vessel was argon gas atmosphere, and the temperature inside the vessel was 60°C.

Comparative Example 2

The conditions of sending the first fluid and the second fluid to the fluid processing device F were as shown in Table 1, and the other conditions were the same as in Example 5, and a dispersion solution of SnBi alloy in a state of liquid metal was prepared between the processing surfaces 1 and 2. A heat medium at 150°C was introduced into the jacket 62 of a vessel 61 equipped with a jacket provided at the outside of the processing members 10 and 20, and the dispersion solution in a state of liquid metal was discharged in a mist state into the vessel from between the processing surfaces 1 and 2 of the fluid processing device F. The discharged dispersion solution in a state of liquid metal adhered to the inner wall of the vessel 61, and the droplets of the SnBi alloy fused and coalesced with each other, so the SnBi alloy did not become fine particles. Therefore, for Comparative Example 2, the particle diameter and the circularity were not obtained.

Table 1 shows the processing conditions for Examples 1 to 14 and Comparative Example 2 (formulation of the first fluid or the first fluid and the second fluid, conditions of sending the first fluid or the first fluid and the second fluid to the fluid processing device F, and operating conditions of the fluid processing device F), the processing conditions for Comparative Example 1 (formulation of the first fluid, conditions of sending the first fluid to the disk-type atomizer, and operating conditions of a disk-type atomizer), and the average particle diameter, the coefficient of variation (CV), and the average circularity of the eutectic alloy fine particles obtained in Examples 1 to 14 and Comparative Example 1.

Table 2 shows the viscosity and the kinematic viscosity at a given temperature of the solvent used as a solvent that serves as a dispersion medium in Examples 1 to 14 and Comparative Example 2. When the solvent that serves as a dispersion medium was silicone oil, the viscosity and the kinematic viscosity of each silicone oil at a prescribed temperature were calculated from the value of the kinematic viscosity listed in the manufacturer's catalog, and the viscosity of the solvents other than silicone oil was measured at a prescribed temperature using a viscometer and converted to kinematic viscosity. The prescribed temperatures were 25°C, 70°C, 110°C, 150°C and 230°C for silicone oil, 25°C and 70°C for the aqueous sodium alginate solution which is an aqueous solvent, and 25°C, 70°C, 110°C and 150°C for the solvents other than silicone oil and aqueous sodium alginate solution. The viscosity of the solvents other than silicone oil at 25°C and 70°C was measured using a cone plate viscometer (RVDV2+PRO CP, manufactured by BROOKFIELD), and the viscosity of the solvents other than silicone oil at 110°C and 150°C was measured using a cylindrical viscometer (RVDV2+PRO CP, manufactured by BROOKFIELD).

The viscosity of the solvent that serves as a dispersion medium introduced between the processing surfaces 1 and 2 is, for Examples 1 to 2, the viscosity of the solvent used as the dispersion solution in preparing the pre-dispersion solution at the introduction temperature (hereinafter referred to as liquid sending temperature) of the pre-dispersion solution introduced between the processing surfaces 1 and 2, and for Examples 3 to 14 and Comparative Example 2, the viscosity of the solvent that serves as a dispersion medium is at the temperature at which the solvent is sent between the processing surfaces 1 and 2. When the viscosity and the kinematic viscosity of the solvent that serves as a dispersion medium at a temperature not listed in Table 2 are desired to be obtained, it is possible to obtain the value of the viscosity or the kinematic viscosity of the solvent that serves as a dispersion medium at the temperature not listed in Table 2 by interpolation from a graph plotting each data of viscosity or kinematic viscosity of the solvent that serves as a dispersion medium at a prescribed temperature listed in Table 2. In Examples or Comparative Examples where the pre-dispersion solution or the solvent that serves as a dispersion medium is introduced between the processing surfaces 1 and 2 at temperatures not described in Table 2, the value obtained by interpolation of the graphs plotting each data of the viscosity of the solvent that serves as a dispersion medium at a prescribed temperature listed in Table 2 is determined the viscosity of the solvent that serves as a dispersion medium introduced between the processing surfaces 1 and 2.

[Table 1]

| | First fluid | Second fluid | Rotation number | Back pressure | Condition of sending first fluid | | | Condition of sending second fluid | | | Results of obtained particles | | |
|---|---|---|---|---|---|---|---|---|---|---|---|---|---|
| | | | | | Flow rate | Liquid feeding pressure | Temperature | Flow rate | Liquid feeding pressure | Temperature | Average particle diameter | Coefficient of variation | Average circularity |
| | | | [rpm] | [MPaG] | [mL/min] | [MPaG] | [°C] | [mL/min] | [MPaG] | [°C] | [μm] | (CV) | |
| Example 1 | Silicone oil KF-96-100cs SnBi alloy pre-dispersion solution | | 5,000 | 0.08 | 50 | 0.25 | 150 | - | - | - | 18 | 0.21 | 0.90 |
| Example 2 | Silicone oil KF-96-1000cs SnBi alloy pre-dispersion solution | | 5,000 | 0.08 | 50 | 0.36 | 151 | - | - | - | 13 | 0.23 | 0.90 |
| Example 3 | Silicone oil KF-96-100cs | SnBi alloy | 5,000 | 0.08 | 50 | 0.25 | 129 | 30 | 0.15 | 150 | 19 | 0.17 | 0.90 |
| Example 4 | Silicone oil KF-96-5000cs | SnBi alloy | 5,000 | 0.08 | 50 | 0.85 | 128 | 30 | 0.21 | 143 | 4.7 | 0.23 | 0.90 |
| Example 5 | Silicone oil SN-6 | SnBi alloy | 5,000 | 0.08 | 50 | 0.48 | 118 | 30 | 0.15 | 146 | 11 | 0.21 | 0.91 |
| Example 6 | Silicone oil KF-96-H-6000cs | SnBi alloy | 5,000 | 0.15 | 50 | 0.90 | 130 | 30 | 0.15 | 146 | 0.9 | 0.35 | 0.90 |
| Example 7 | Silicone oil KF-96-5000cs | SnAgCu alloy | 5,000 | 0.08 | 50 | 0.81 | 230 | 30 | 0.15 | 245 | 5.5 | 0.25 | 0.90 |

EP 4 491 302 A1

24

(continued)

| | First fluid | Second fluid | Rotation number | Back pressure | Condition of sending first fluid | | | Condition of sending second fluid | | | Results of obtained particles | | |
|---|---|---|---|---|---|---|---|---|---|---|---|---|---|
| | | | | | Flow rate | Liquid feeding pressure | Temperature | Flow rate | Liquid feeding pressure | Temperature | Average particle diameter | Coefficient of variation | Average circularity |
| | | | [rpm] | [MPaG] | [mL/min] | [MPaG] | [°C] | [mL/min] | [MPaG] | [°C] | [μm] | (CV) | |
| Example 8 | Liquid paraffin (manufac-tured by FU-JIFILM Wako Pure Chemi-cal Corpora-tion) | Wood's alloy | 5,000 | 0.08 | 200 | 0.45 | 70 | 30 | 0.15 | 85 | 31 | 0.25 | 0.89 |
| Example 9 | 1 wt% sodium alginate aqueous solution | Wood's alloy | 5,000 | 0.08 | 200 | 0.65 | 71 | 30 | 0.15 | 85 | 27 | 0.28 | 0.89 |
| Example 10 | 3 wt% sodium alginate aqueous solution | Wood's alloy | 5,000 | 0.08 | 200 | 0.87 | 71 | 30 | 0.16 | 85 | 10 | 0.29 | 0.90 |
| Example 11 | SnBi alloy | Silicone oil KF-96-100cs | 5,000 | 0.08 | 30 | 0.15 | 150 | 50 | 0.30 | 133 | 14 | 0.24 | 0.90 |
| Example 12 | SnBi alloy | Liquid paraffin SMOIL P55 | 5,000 | 0.08 | 30 | 0.15 | 150 | 300 | 0.26 | 150 | 45 | 0.18 | 0.90 |
| Example 13 | SnBi alloy | Liquid paraffin (manufac-tured by FU-JIFILM Wako Pure Chemi-cal Corpora-tion) | 5,000 | 0.08 | 30 | 0.15 | 151 | 300 | 0.28 | 145 | 33 | 0.21 | 0.90 |
| Example 14 | SnBi alloy | Mixture of silicone oil and liquid paraffin | 5,000 | 0.08 | 30 | 0.15 | 151 | 300 | 0.31 | 144 | 25 | 0.25 | 0.90 |

(continued)

| | First fluid | Second fluid | Rotation number | Back pressure | Condition of sending first fluid | | | Condition of sending second fluid | | | Results of obtained particles | | |
|---|---|---|---|---|---|---|---|---|---|---|---|---|---|
| | | | | | Flow rate | Liquid feeding pressure | Temperature | Flow rate | Liquid feeding pressure | Temperature | Average particle diameter | Coefficient of variation | Average circularity |
| | | | [rpm] | [MPaG] | [mL/min] | [MPaG] | [°C] | [mL/min] | [MPaG] | [°C] | [μm] | (CV) | |
| Comparative Example 1 | SnBi alloy | - | 30,000 | - | About 500 | - | 170 | - | - | - | 65 | 0.80 | 0.82 |
| Comparative Example 2 | Silicone oil SN-6 | SnBi alloy | 5,000 | 0.08 | 50 | 0.47 | 126 | 30 | 0.15 | 165 | - | - | - |

[Table 2]

| Solvent served as dispersion medium | 25°C | | 70°C | | 110°C | | 150°C | | 230°C | |
|---|---|---|---|---|---|---|---|---|---|---|
| | Kinematic viscosity | Viscosity | Kinematic viscosity | Viscosity | Kinematic viscosity | Viscosity | Kinematic viscosity | Viscosity | Kinematic viscosity | Viscosity |
| | [mm$^2$/s] | [mPa·s] | [mm$^2$/s] | [mPa·s] | [mm$^2$/s] | [mPa·s] | [mm$^2$/s] | [mPa·s] | [mm$^2$/s] | [mPa·s] |
| Silicone oil KF-96-100cs | 100 | 98 | 51 | 47 | 29 | 26 | 18 | 16 | 8.0 | 6.4 |
| Silicone oil KF-96-1000cs | 1,000 | 980 | 500 | 470 | 270 | 240 | 170 | 140 | 80 | 65 |
| Silicone oil SN-6 | 3,000 | 2,930 | 1500 | 1400 | 830 | 750 | 500 | 430 | 240 | 190 |
| Silicone oil KF-96-5000cs | 5,000 | 4,880 | 2500 | 2300 | 1400 | 1300 | 850 | 740 | 400 | 320 |
| Silicone oil KF-96H-6000cs | 6,000 | 5,850 | 3000 | 2800 | 1700 | 1500 | 1000 | 870 | 420 | 340 |
| Liquid paraffin SMOIL P55 | 19 | 16 | 5.8 | 4.9 | 4.7 | 3.7 | 3.2 | 2.4 | - | - |
| Liquid paraffin (manufactured by FUJIFILM Wako Pure Chemical Corporation) | 75 | 64 | 14 | 12 | 10 | 8.7 | 6.3 | 5.0 | - | - |
| Mixture of silicone oil and liquid paraffin | 100 | 92 | 55 | 49 | 19 | 16 | 6.3 | 5.3 | - | - |
| 1 wt% sodium alginate aqueous solution | 530 | 530 | 180 | 180 | - | - | - | - | - | - |
| 3 wt% sodium alginate aqueous solution | 1,400 | 1,400 | 630 | 630 | - | - | - | - | - | - |

As can be seen from Table 1 and Table 2, the eutectic alloy fine particles obtained in the Examples were each the average particle diameter of 0.1 μm or more to 50 μm or less, the coefficient of variation (CV) of 0.4 or less, and the average circularity of 0.85 or more without carrying out classification step in the respective conditions.

According to the present invention, it is possible to easily produce eutectic alloy fine particles controlled in the particle diameter.

| 1 | First processing surface |
| 2 | Second processing surface |
| 3 | Circular flow path |
| 10 | First processing member |
| 20 | Second processing member |
| d1 | First introduction part |
| d10 | First introduction port |
| d2 | Second introduction part |
| d20 | Second introduction port |
| M | Rotary drive mechanism |

**Claims**

1. A method for continuously producing eutectic alloy fine particles having a particle diameter of 0.1 μm to 50 μm, the method comprises of;

   using a fluid to be processed which contains at least a melt of a eutectic alloy that serves as a dispersoid and a solvent that serves as a dispersion medium,
   introducing the fluid to be processed continuously into an atomizer that atomizes the fluid between at least two processing surfaces arranged opposite to each other, passing through a liquid state in which the melt of the eutectic alloy and the solvent are solution in the atomizer, and cooling the fluid discharged from the atomizer to obtain solid eutectic alloy fine particles, wherein
   the melt of the eutectic alloy is dispersed in droplet state in the solvent between the at least two processing surfaces, and
   a viscosity of the solvent introduced between the at least two processing surfaces is changed, whereby a particle diameter of the melt of the eutectic alloy in the droplet state is controlled.

2. The method for continuously producing eutectic alloy fine particles according to Claim 1, wherein

   the atomizer used in the producing method is provided with a rotary drive mechanism for rotating at least one of the at least two processing surfaces relative to the other, and
   the at least two processing surfaces define a circular flow path through which the fluid to be processed passes, wherein
   by passing through the circular flow path from the inside to the outside in the radial direction in a state of being a thin-film fluid, dispersion treatment is performed to the fluid to be processed between the at least two processing surfaces, and the fluid that is subjected to dispersion treatment is discharged from between the at least two processing surfaces to the outside, wherein
   the fluid that is subjected to the dispersion treatment is a dispersion solution in which the melt of the eutectic alloy is dispersed in droplet state in the solvent, wherein
   the melt of the eutectic alloy in droplet state is solidified to obtain solid eutectic alloy fine particles, wherein
   a particle diameter of the solid eutectic alloy fine particles is controlled by changing a viscosity of the solvent introduced between the at least two processing surfaces.

3. The method for continuously producing eutectic alloy fine particles according to Claim 1 or 2, wherein the fluid to be processed includes a dispersion solution in which the melt of the eutectic alloy is premixed with the solvent and the melt of the eutectic alloy is pre-dispersed in the solvent.

4. The method for continuously producing eutectic alloy fine particles according to Claim 1 or 2, wherein

   the fluid to be processed includes a first fluid and a second fluid, and
   of the first fluid and the second fluid, one fluid includes the melt of the eutectic alloy, and the other fluid of the first fluid and the second fluid includes the solvent.

5. The method for continuously producing eutectic alloy fine particles according to Claim 4, wherein

the atomizer used in the producing method is provided with at least two introduction ports in the circular flow path, and
one introduction port is an opening leading to the circular flow path which introduces the first fluid from inside the circular flow path, and the other one introduction port is opened in the middle of the circular flow path, and the second fluid is joined to the first fluid which has become forcibly into a thin-film fluid by the at least two processing surfaces, so that dispersion treatment is performed to the fluid to be processed between the at least two processing surfaces.

6. The method for continuously producing eutectic alloy fine particles according to Claim 1 or 2, wherein a particle diameter of the melt of the eutectic alloy in droplet state is decreased by increasing a viscosity of the solvent introduced between the at least two processing surfaces.

7. The method for continuously producing eutectic alloy fine particles according to Claim 1 or 2, wherein a particle diameter of the melt of the eutectic alloy in droplet state is increased by decreasing a viscosity of the solvent introduced between the at least two processing surfaces.

8. The method for continuously producing eutectic alloy fine particles according to Claim 1 or 2, wherein a value of a coefficient of variation (CV) of a particle diameter of the solid eutectic alloy fine particles is 0.4 or less.

9. The method for continuously producing eutectic alloy fine particles according to Claim 1 or 2, wherein an average circularity of the solid eutectic alloy fine particles is 0.85 or more.

10. The method for continuously producing eutectic alloy fine particles according to Claim 1 or 2, wherein the solvent is in a liquid state in the range of -20°C to +30°C of the melting point of the eutectic alloy, and the solvent does not dissolve the eutectic alloy.

11. The method for continuously producing eutectic alloy fine particles according to Claim 1 or 2, wherein the solid eutectic alloy fine particles are solder alloy fine particles, lead-free solder alloy fine particles or low boiling-point alloy fine particles.

FIG. 1

FIG. 2

FIG. 3

(A)

(B)

FIG. 4

FIG. 5

10μm

FIG. 6

## INTERNATIONAL SEARCH REPORT

International application No.

**PCT/JP2022/021536**

### A. CLASSIFICATION OF SUBJECT MATTER

***B22F 9/08***(2006.01)i; ***B01F 29/00***(2022.01)i

FI:   B22F9/08 A; B01F29/00

According to International Patent Classification (IPC) or to both national classification and IPC

### B. FIELDS SEARCHED

Minimum documentation searched (classification system followed by classification symbols)

B22F9/08; B01F29/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | KR 10-2010-0098481 A (JUNG, Eun) 07 September 2010 (2010-09-07)<br>claims 1-2, paragraphs [0007], [0014]-[0037], tables 1, 2, fig. 2-9 | 1-11 |
| Y | JP 2011-189348 A (M.TECHNIQUE CO., LTD.) 29 September 2011 (2011-09-29)<br>claims 1-7, paragraphs [0008], [0080]-[0095], [0605]-[0647], fig. 1, 2 | 1-11 |
| A | JP 2004-018890 A (TAMURA KAKEN CO., LTD.) 22 January 2004 (2004-01-22)<br>entire text | 1-11 |
| A | JP 09-049007 A (HARADA KK) 18 February 1997 (1997-02-18)<br>entire text | 1-11 |
| A | KR 10-2011-0018409 A (ADHOTEC CO., LTD.) 23 February 2011 (2011-02-23)<br>entire text | 1-11 |
| A | CN 110465672 A (TECHNICAL INSTITUTE OF PHYSICS AND CHEMISTRY, CHINESE ACADEMY OF SCIENCES) 19 November 2019 (2019-11-19)<br>entire text | 1-11 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 June 2022** | **28 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/021536** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017/0326523 A1 (UNIVERSITY OF MASSACHUSETTS) 16 November 2017 (2017-11-16)<br>entire text | 1-11 |
| A | JP 2013-194245 A (TAIHO KOGYO CO., LTD.) 30 September 2013 (2013-09-30)<br>entire text | 1-11 |

Form PCT/ISA/210 (second sheet) (January 2015)

**INTERNATIONAL SEARCH REPORT**
Information on patent family members

International application No.

**PCT/JP2022/021536**

| Patent document cited in search report | | | Publication date (day/month/year) | Patent family member(s) | Publication date (day/month/year) |
|---|---|---|---|---|---|
| KR | 10-2010-0098481 | A | 07 September 2010 | (Family: none) | |
| JP | 2011-189348 | A | 29 September 2011 | US 2010/0155310 A1<br>claims 1-18, paragraphs<br>[0012], [0255]-[0308], [0857]-<br>[0903], fig. 1-32<br>EP 2177210 A1<br>WO 2009/008388 A1 | |
| JP | 2004-018890 | A | 22 January 2004 | (Family: none) | |
| JP | 09-049007 | A | 18 February 1997 | (Family: none) | |
| KR | 10-2011-0018409 | A | 23 February 2011 | (Family: none) | |
| CN | 110465672 | A | 19 November 2019 | (Family: none) | |
| US | 2017/0326523 | A1 | 16 November 2017 | WO 2016/069604 A1 | |
| JP | 2013-194245 | A | 30 September 2013 | (Family: none) | |

Form PCT/ISA/210 (patent family annex) (January 2015)

38

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008240060 A
- JP 2020004511 A
- JP 3035308 A

- JP 2017002406 A
- JP 2016038711 A
- JP 2011189348 A

**Non-patent literature cited in the description**

- **AKIHIKO YANAGITANI**. Atomized Metal Powders ''3D Printer and Recent Forming Technology. *I. General Introduction, Introduction to Atomized Metal Powders, Special Steel*, 01 July 2016, vol. 65 (4), 2-5
- Chemistry Handbook, Fundamentals II. Maruzen Corporation, 25 June 1984, 80-81

- **NOBUYASU KAWAI** ; **YOSHITOMO SATO** ; **YOSHI-KAZU SEKI**. Production of metal fine powder by atomization method. *Resources Processing Technology*, 29 December 1986, vol. 33 (4), 227-232
- Atomized Metal Powder '3D Printer and Recent Forming Technology. **TAKAO HAMAMOTO**. II. Powder Manufacturing Technology and Features 3. Features and Latest Trend of Disk Atomization. Special Steel, Special Steel Association of Japan, 01 July 2016, vol. 65, 18-21